(19) Europäisches Patentamt / European Patent Office / Office européen des brevets

(11) **EP 3 693 902 B1**

(12) **FASCICULE DE BREVET EUROPEEN**

(45) Date de publication et mention de la délivrance du brevet:
**05.04.2023 Bulletin 2023/14**

(21) Numéro de dépôt: **20155329.4**

(22) Date de dépôt: **04.02.2020**

(51) Classification Internationale des Brevets (IPC):
**G06Q 10/04** *(2012.01)* **G06Q 10/08** *(2012.01)*
**B65G 1/137** *(2006.01)* **G06Q 50/28** *(2012.01)*

(52) Classification Coopérative des Brevets (CPC):
**G06Q 50/28; G06Q 10/08**

(54) **PROCÉDÉ DE SÉQUENCEMENT DE CHARGES DANS UN SYSTÈME DE DISTRIBUTION AUTOMATISÉ, AVEC RÉDUCTION D'UN DÉSORDRE LORS D'UNE COLLECTE DE CHARGES SUR UN COLLECTEUR**

VERFAHREN ZUR TAKTUNG VON LADUNGEN IN EINEM AUTOMATISCHEN VERTEILUNGSSYSTEM MIT REDUZIERUNG EINER UNORDNUNG BEI EINER LADUNGSSAMMLUNG AUF EINEM LADESAMMLER

METHOD FOR SEQUENCING LOADS IN AN AUTOMATED TIMING SYSTEM, WITH REDUCTION OF A DISTURBANCE DURING A LOAD COLLECTION ON A MANIFOLD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.02.2019 FR 1901297**
**17.05.2019 FR 1905216**

(43) Date de publication de la demande:
**12.08.2020 Bulletin 2020/33**

(73) Titulaires:
• **Savoye**
**21000 Dijon (FR)**
• **Université de Technologie de Compiègne**
**60203 Compiègne Cedex (FR)**

(72) Inventeurs:
• **COLLIN, Jean-Michel**
**21190 MERCEUIL (FR)**
• **VACHER, Blandine**
**03340 NEUILLY-LE-REAL (FR)**
• **JOUGLET, Antoine**
**60200 COMPIEGNE (FR)**
• **NACE, Dritan**
**60200 COMPIEGNE (FR)**

(74) Mandataire: **Vidon Brevets & Stratégie**
**16B, rue de Jouanet**
**BP 90333**
**35703 Rennes Cedex 7 (FR)**

(56) Documents cités:
• Vacher ET AL: "7 septembre 2018", Journée du laboratoire Heudiasyc, 7 septembre 2018 (2018-09-07), page 1,3,6,87,88, XP055610659, Extrait de l'Internet: URL:file:///C:/Users/RB22846/Desktop/temp/ Livret_journee_HDS_2018_BD.pdf [extrait le 2019-08-02]
• Blandine Vacher ET AL: "Le problème d'injection dans un entrepôt", ROADEF 2019, 21 février 2019 (2019-02-21), pages 1-2, XP055644474, Extrait de l'Internet: URL:https://roadef2019.univ-lehavre.fr/pro gramme/ROADEF2019_submissions/ROADEF2 019_p aper_43.pdf [extrait le 2019-11-20]
• Blandine Vacher ET AL: "Optimisation d'un système autonome de tri", , 23 février 2018 (2018-02-23), pages 1-2, XP055644640, Extrait de l'Internet: URL:https://roadef2018.labsticc.fr/Roadef2 018-Pdf/ROADEF2018_paper_091.pdf [extrait le 2019-11-20]

**Description**

## 1. DOMAINE TECHNIQUE

Le domaine de l'invention est celui de la logistique, et en particulier celui des systèmes automatisé de distribution de charges.

Plus précisément, l'invention concerne un procédé de séquencement de charges dans un tel système de distribution automatisé.

On suppose que le système de distribution automatisé comprend :

- k sources, avec $k \geq 2$ ;
- au moins une destination ;
- k dispositifs tampons sources, de type FIFO (pour « First In First Out » en anglais, ou « premier entré premier sorti » en français), recevant chacun des charges provenant d'une des k sources ;
- un collecteur collectant les charges sortant des k dispositifs tampons sources et les transportant vers ladite au moins une destination, le collecteur comprenant k noeuds successifs configurés chacun pour collecter les charges sortant d'un des k dispositifs tampons sources ; et
- un système de pilotage configuré pour traiter des commandes, chaque commande listant des charges à extraire des sources et à fournir à une destination donnée, idéalement dans un ordre de destination donné croissant (il peut s'agir d'un ordre croissant strict, par exemple « 1 2 3 4 5 », ou non strict, par exemple « 1 1 2 2 2 3 4 4 5 »). Chaque charge est associée à un numéro d'ordre de destination.

Ainsi, si on considère que les charges sortant des k dispositifs tampons sources forment k flux entrants de charges, et que les charges après collecte sur le collecteur forment un flux sortant de charges, la problématique est celle de la formation du flux sortant à partir des k flux entrants (c'est-à-dire du regroupement de k flux entrants en un flux sortant). Il convient de réfléchir à la formation de ce flux sortant pour être le plus efficace possible, aussi bien en termes de tri (ou pré-tri) que de cadence. On cherche en effet à avoir un flux sortant le plus dense possible tout en faisant attention à l'ordre de sortie des charges.

Le système de pilotage traite les commandes et génère en sortie des instructions permettant de piloter (commander) des éléments du système de distribution automatisé, notamment les sources, les dispositifs tampons sources de type FIFO, le collecteur et la ou les destinations. Le système de pilotage est par exemple un système informatique de gestion central (aussi appelé SGE, pour « Système de Gestion d'Entrepôt », ou WCS, pour « Warehouse Control System » en anglais).

L'invention s'applique notamment, mais non exclusivement, dans le cas où chaque source du système de distribution automatisé est une partie d'un magasin de stockage (cette partie est aussi appelée « ensemble de rangement » dans la suite de la description) et chaque destination du système de distribution automatisé est un poste de préparation de commande (aussi appelé « poste de picking »).

Il est clair cependant que de nombreuses variantes peuvent être envisagées sans sortir du cadre de la présente invention. Par exemple, chaque source peut être définie comme un magasin de stockage, un ensemble comprenant plusieurs magasins de stockage, ou encore un dispositif de stockage (moins complexe qu'un magasin de stockage).

## 2. ARRIÈRE-PLAN TECHNOLOGIQUE

On s'attache plus particulièrement dans la suite de ce document à décrire la problématique existant dans le cas particulier où le système de distribution automatisé est utilisé pour la préparation de colis. L'invention ne se limite bien sûr pas à cette application particulière.

Les systèmes de préparation de colis sont plus particulièrement utilisés dans les entreprises d'expédition et de vente à distance de produits de petit volume. Les principaux exemples d'utilisateurs de ces systèmes automatisés de préparation de colis sont les fournisseurs de matériels de bureau, de vêtements, de produits cosmétiques, d'outillages ou de pièces détachées dans l'industrie mécanique. Ces systèmes permettent de préparer avec un minimum de main-d'oeuvre, dans un délai court et avec un suivi précis des stocks, un colis correspondant à une commande précise d'un client, cette commande portant sur plusieurs produits en différentes quantités, chacun des produits avec sa quantité étant identifié par une ligne de la commande (chaque ligne de la commande définit un contenant de stockage dans lequel se trouve le produit souhaité).

Un exemple d'un tel système automatisé de préparation de colis est décrit notamment dans la demande de brevet FR2915979A1 déposée par la demanderesse. Il comprend par exemple :

- un magasin de stockage automatisé renfermant les produits dans des contenants de stockage (correspondant aux charges précitées), chaque contenant de stockage étant associé à une référence unique de produit (ce peut être aussi des contenants renfermant une commande spécifique ou un mélange de produits) ;

- un poste de préparation de commande, où les produits sont prélevés et placés par un opérateur dans un colis (contenant d'expédition) ;
- un ensemble de convoyeurs amenant les contenants de stockage, dans lesquels se trouvent les produits, du magasin de stockage au poste de préparation de commande ou d'expédition et réciproquement ; et
- un système de pilotage (WCS).

Le magasin de stockage automatisé comprend par exemple quatre ensembles de rangement, chaque ensemble de rangement étant formé d'une allée desservant de part et d'autre une étagère de stockage (ou rayonnage) à plusieurs niveaux de rangements superposés, chaque étagère étant subdivisée sur sa longueur en emplacements de stockage (également appelés cellules) destinés à accueillir chacune un contenant de stockage. Chaque allée reçoit, à chaque niveau de rangement, des voies pour le déplacement d'un dispositif de transfert (également appelé chariot de collecte et de transport ou navette) qui assure le déplacement des contenants de stockage, pour leur mise en place à l'intérieur des emplacements de stockage et pour leur prélèvement depuis ces emplacements. Une voie est généralement formée de deux rails parallèles et le chariot est équipé de roues pour se déplacer sur ces rails. Les chariots peuvent non seulement se déplacer horizontalement à un niveau de rangement donné, mais aussi être amenés d'un niveau à un autre d'une allée, lorsqu'ils transportent ou non un contenant de stockage, par des élévateurs (également appelés élévateurs/descendeurs, convoyeurs en spirale, mini-transstockeurs (« mini-loads » en anglais), etc.) qui sont disposés à une ou aux deux extrémités des allées (voire au milieu). Ces élévateurs permettent en outre le transfert d'un contenant de stockage placé sur un chariot vers l'ensemble de convoyeurs.

Le système de pilotage gère la commande qui est associée à chaque colis (contenant d'expédition) et qui liste des contenants de stockage (charges), en fonction de l'emplacement de ces contenants de stockage dans le magasin de stockage, de la disponibilité des chariots et des élévateurs du magasin de stockage, ainsi que de l'ordre de destination (aussi appelé « ordre poste ») dans lequel ces contenants de stockage doivent se succéder au poste de préparation de commande. Ceci a pour but d'optimiser tous les déplacements et les temps de préparation des colis et d'assurer la synchronisation entre l'arrivée, au poste de préparation, d'un colis en préparation et des contenants de stockage listés dans la commande associée à ce colis en préparation.

L'infrastructure de la demande est également décrite dans le document "Le problème d'injection dans un entrepôt" (Blandine Vacher et al, ROADEF 2019).

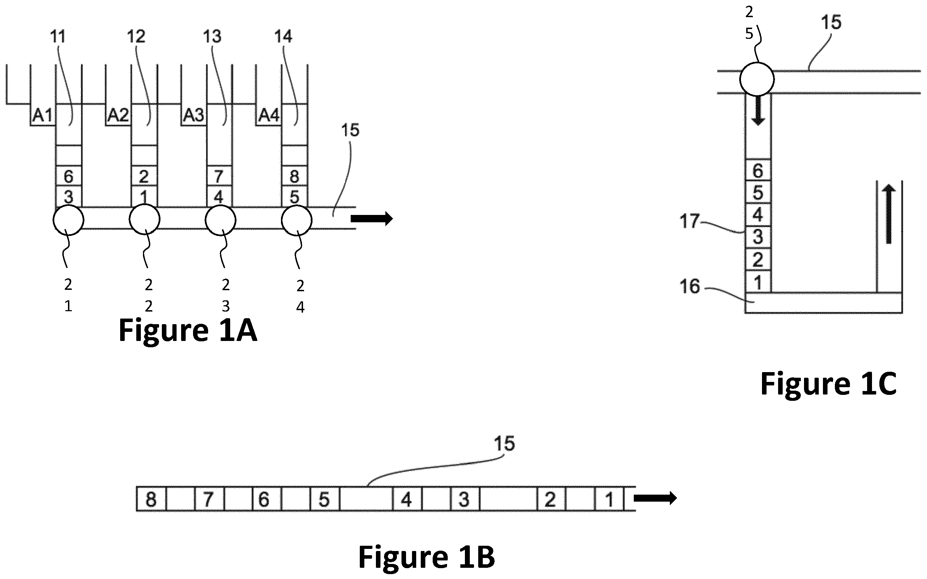

On présente maintenant plus en détail, en relation avec les **figures 1A, 1B et 1C** (qui correspondent à trois états successifs du traitement d'une commande), une première solution connue de traitement d'une commande (et de séquencement des charges correspondantes) par le système de pilotage, dans le contexte particulier (présenté ci-dessus) d'un système automatisé de préparation de colis. Dans un souci de simplification, tous les éléments constitutifs du système de distribution automatisé ne sont pas représentés sur ces figures.

La figure 1A présente uniquement : les extrémités de quatre ensembles de rangement A1 à A4, qui font partie du magasin de stockage automatisé et constituent quatre sources stockant des charges ; une pluralité de dispositifs tampons sources 11 à 14, de type FIFO et placés chacun immédiatement en aval d'une des quatre sources A1 à A4 ; et un collecteur 15 (composé par exemple d'un ou plusieurs convoyeurs), collectant, via des noeuds 21 à 24, les charges sortant des dispositifs tampons sources 11 à 14 et les transportant jusqu'au poste de préparation de commande 16 (destination). Le collecteur 15 sert donc à délocaliser le poste de préparation de commande 16 par rapport au magasin de stockage automatisé. En effet, les bâtiments ne permettent pas toujours de disposer le poste préparation de commande à côté du magasin de stockage.

La figure 1C présente uniquement : le collecteur 15 ; le poste de préparation de commande 16 (composé par exemple d'un ou plusieurs convoyeurs) et constituant une destination recevant des charges ; et un dispositif tampon destination 17, de type FIFO et placé en amont du poste de préparation de commande 16, pour recevoir des charges via un noeud 25.

Dans cet exemple, on suppose que la commande liste huit charges dans un ordre de destination donné, correspondant à l'ordre croissant des références 1 à 8 que ces charges portent sur les figures. En d'autres termes, le poste de préparation de commande 16 doit recevoir ces huit charges dans l'ordre de 1 à 8. On suppose également que les charges référencées 3 et 6 sont stockées dans la source A1, les charges référencées 1 et 2 sont stockées dans la source A2, les charges référencées 4 et 7 sont stockées dans la source A3, et les charges référencées 5 et 8 sont stockées dans la source A4.

Pour traiter la commande précitée, le système de pilotage effectue un premier ordonnancement « intra-source » (ordonnancement avant la sortie des sources), en commandant chacune des sources A1 à A4 pour que les charges de la commande qui y sont stockées en sortent conformément à l'ordre de destination donné. Ainsi, comme illustré sur la figure 1A, le dispositif tampon source 11 (placé en aval de la source A1) reçoit successivement les charges référencées 3 et 6. Le dispositif tampon source 12 (placé en aval de la source A2) reçoit successivement les charges référencées 1 et 2. Le dispositif tampon source 13 (placé en aval de la source A3) reçoit successivement les charges référencées 4 et 7. Le dispositif tampon source 14 (placé en aval de la source A4) reçoit successivement les charges référencées 5 et 8.

Puis, le système de pilotage effectue un deuxième ordonnancement « inter-sources » (ordonnancement après la sortie des sources), en commandant les dispositifs tampons sources 11 à 14 et les noeuds 21 à 24 pour que les charges listées dans la commande soient collectées sur le collecteur 15 en y étant rangées dans l'ordre de destination souhaité. Pour cela, des règles de décision (règles d'injection et d'avance) sont appliquées au niveau de chacun des noeuds 21 à 24.

Règles d'injection, pour une charge se présentant à un noeud en provenance d'une des sources A1 à A4 (via un des dispositifs tampons sources 11 à 14) : la charge est injectée sur le collecteur 15, en aval de ce noeud, si ce noeud est celui le plus en amont des destinations ; pour un noeud autre que celui le plus en amont des destinations, la charge est injectée si aucune autre charge ayant un numéro d'ordre de destination inférieur n'est présente en amont de ce noeud, dans un des dispositifs tampons sources ou sur le collecteur, et si aucune autre charge ayant un numéro d'ordre de destination inférieur n'est présente en aval de ce noeud, dans un des dispositifs tampons sources reliés aux autres noeuds (sinon elle n'est pas injectée) ; par exemple, même si elle est prête à sortir du dispositif tampon source 13 via le noeud 23, la charge référencée 4 n'est pas injectée sur le collecteur 15 tant que les charges référencées 1, 2 et 3 sont situées en amont du noeud 23, dans un des dispositifs tampons sources 21 et 22 ou sur le collecteur 15.

Règle d'avance, pour une charge déjà présente sur le collecteur 15 et se présentant à un noeud (en provenance d'un autre noeud en amont) : la charge avance si aucune autre charge ayant un numéro d'ordre de destination inférieur n'est présente dans le dispositif tampon source relié à ce noeud (sinon elle n'avance pas) ; par exemple, si on suppose que la charge référencée 3 a été placée (injectée) sur le collecteur 15, alors quand elle va se présenter au noeud 22 elle ne va pas avancer tant que les charges référencées 1 et 2 sont situées dans le dispositif tampon source 12 relié à ce noeud 22.

La figure 1B illustre les charges référencées 1 à 8 en cours de transport par le collecteur 15, après y avoir été collectées (placées) dans l'ordre de destination voulu (de 1 à 8). Comme illustré sur la figure 1C, le système de pilotage commande le dispositif tampon destination 17 pour que les charges (qui y entrent, via le noeud référencé 25, déjà triées selon l'ordre de destination voulu) en ressortent au rythme souhaité pour être présentées au poste de préparation de commande 16.

Un inconvénient de la première solution connue illustrée sur les figures 1A à 1C, et de ses règles d'injection et d'avance, est que le taux de remplissage du collecteur (et donc le débit en sortie de celui-ci) n'est pas optimal.

Afin de pallier l'inconvénient précité, une deuxième solution connue est décrite dans la demande de brevet FR3058708A1 déposée par la demanderesse. Le principe général de cette deuxième solution connue consiste à faire une analyse plus fine que dans la première solution connue précitée, pour décider si une charge provenant d'une source peut être injectée au niveau d'un noeud analysé. Ainsi, dans certains cas, la deuxième solution connue aboutit à une injection de la charge (tout en garantissant qu'il n'y a pas de risque d'inter-blocage), tandis que la première solution connue aboutit à une non injection de la charge. Donc, la deuxième solution connue permet d'augmenter le taux de remplissage du collecteur (et donc le débit en sortie de celui-ci). Ceci permet également une réduction des temps d'attente des charges avant leur injection sur le collecteur, via les noeuds.

Les première et deuxième solutions connues discutées plus haut présentent cependant deux inconvénients :

- elles imposent des contraintes fortes sur les sources puisque l'ordonnancement « intra-source » (c'est-à-dire avant la sortie des sources) impose à chacune des sources que, pour une commande donnée, les charges qui en sortent soient ordonnées conformément à l'ordre croissant des numéros d'ordre de destination des charges ; et
- elles imposent des contraintes fortes sur les dispositifs tampons sources et le collecteur puisque l'ordonnancement « inter-sources » (c'est-à-dire après la sortie des sources) impose, lors de la collecte des charges sur le collecteur, un respect de l'ordre croissant des numéros d'ordre de destination des charges (en d'autres termes, pas de désordre possible pour les charges à l'issue de la collecte sur le collecteur).

Afin de pallier ces inconvénients, il existe une troisième solution connue qui vise à supprimer les contraintes fortes précitées sur les sources, les dispositifs tampons sources et le collecteur. Le pilotage est tel que s'il y a une place libre sur le collecteur pour une charge prête à sortir d'un dispositif tampon source, la charge est collectée sur le collecteur. Avec cette troisième solution connue, les charges peuvent sortir des sources dans le désordre et être collectées sur le collecteur dans le désordre. Cependant, si l'ordre croissant des numéros d'ordre de destination des charges doit être respecté lors de l'arrivée des charges dans les destinations, il est nécessaire d'effectuer un séquencement (aussi appelé « ordonnancement »), c'est-à-dire une remise dans l'ordre de destination souhaité, des charges après leur collecte sur le collecteur. Pour cela, au moins un système (ou dispositif) de stockage tampon et de séquencement de charges est placé entre le collecteur et la ou les destinations. Des exemples d'un tel système de stockage tampon et de séquencement sont décrits dans les demandes de brevets FR3051948A1, FR3045583A1 et FR3031510A1 déposées par la demanderesse (leur contenu est inséré ici par référence).

La troisième solution connue présente cependant elle aussi des inconvénients :

- l'attente d'une place libre sur le collecteur peut conduire à une accumulation de charges non souhaitée dans un ou plusieurs des dispositifs tampons sources (notamment celui situé le plus en aval du collecteur) ;
- le flux de charges sortant du collecteur peut devenir saccadé, ce qui signifie que toute la capacité mécanique du collecteur n'est pas utilisée (les charges sont plus espacées entre elles sur le collecteur que nécessaire, ce qui fait perdre de la place et diminuer le taux de production en bout de ligne) ; et
- l'ordre de collecte des charges sur le collecteur ne tenant pas compte de l'ordre croissant des numéros d'ordre de destination, si une remise dans l'ordre des charges est nécessaire, elle repose entièrement sur le système de stockage tampon et de séquencement de charges placé entre le collecteur et la ou les destinations. Ceci augmente la complexité et la capacité de traitement du système de stockage tampon et de séquencement.

## 3. RÉSUMÉ

Dans un mode de réalisation particulier de l'invention, il est proposé un procédé de séquencement de charges, mis en oeuvre par un système de pilotage dans un système automatisé de distribution de charges comprenant :

- k sources, avec k≥2 ;
- au moins une destination ;
- un ensemble G de k dispositifs tampons sources, de type « premier entré premier sorti », recevant chacun des charges provenant d'une des k sources ;
- un collecteur collectant les charges sortant des k dispositifs tampons sources et les transportant vers ladite au moins une destination, le collecteur comprenant k noeuds successifs configurés chacun pour collecter les charges sortant d'un des k dispositifs tampons sources ; et
- ledit système de pilotage configuré pour traiter des commandes, chaque commande listant des charges pour une destination donnée et associées chacune à un numéro d'ordre de destination ;

ledit système de pilotage effectuant les étapes suivantes :

- construction d'une liste de collecte $L_C$ contenant n charges à collecter et réduisant un désordre desdites n charges calculé avec une fonction de calcul de désordre par rapport à un ordre croissant des numéros d'ordre de destination, lesdites n charges étant contenues dans les k dispositifs tampons sources, $n = \sum_{i=1}^{i=k} p(i)$ , avec p(i) un nombre de charges à collecter dans le $i^{ème}$ dispositif tampon source ; et
- commande du collecteur et des dispositifs tampons sources pour une collecte de charges sur le collecteur conforme à ladite liste de collecte $L_C$.

Ainsi, la solution proposée propose une approche tout à fait nouvelle et inventive, selon laquelle le système de pilotage commande le collecteur et les dispositifs tampons sources pour une collecte, sous une contrainte faible de respect d'un ordre croissant des numéros d'ordre de destination, des charges sortant des dispositifs tampons sources. Un viol de cette contrainte faible génère, lors de la collecte des charges sur le collecteur, un désordre que la solution proposée permet de réduire.

La solution proposée permet donc de pallier à la fois les inconvénients des première et deuxième solutions connues et les inconvénients de la troisième solution connue. En particulier, la solution proposée n'impose pas les contraintes fortes précitées sur les sources, les dispositifs tampons sources et le collecteur, mais seulement une contrainte faible (c'est-à-dire pouvant être violée, ce qui en l'espèce génère un désordre que l'on cherche à réduire) sur les dispositifs tampons sources et le collecteur. Par ailleurs, la réduction du désordre lors de la collecte permet de faciliter le travail des destinations (si celles-ci n'imposent pas un respect de l'ordre croissant des numéros d'ordre de destination des charges qui parviennent à ces destinations), ou bien de réduire le travail du système de stockage tampon et de séquencement de charges (s'il y en a un placé entre le collecteur et la ou les destinations pour garantir le respect de l'ordre croissant des numéros d'ordre de destination des charges arrivant à la ou les destinations).

Dans une première mise en oeuvre, l'étape de construction de la liste de collecte $L_C$ comprend les étapes suivantes :

(a) initialisation d'un premier ensemble d'états E1 avec un unique état $e_{init}=(U_{init}, L_{init})$, où $U_{init}$ est un k-uplet contenant k zéros et $L_{init}$ est une liste vide ;
(b) initialisation d'un deuxième ensemble d'états E2 avec une valeur vide ;

(c) pour chaque étape de construction parmi n étapes de construction successives :

(c.1) pour chaque état e de E1, avec e=(U, L), où U est un k-uplet contenant k éléments, U=($z_1$, ..., $z_k$) avec $z_i$ un nombre de charges prises dans le $i^{ème}$ dispositif tampon source, $i \in \{1, ..., k\}$, et L est une liste de charges associée à U :
(c.1.1) pour chaque valeur de $f \in \{1, ..., k\}$ :
(c.1.1.1) si U(f)<p(f), avec U(f) un nombre de charges du $f^{ème}$ dispositif tampon source contenues dans L, et p(f) le nombre de charges à collecter dans le $f^{ème}$ dispositif tampon source :

- i- création d'un nouvel état $e_N$=($U_N,L_N$) en partant de e=(U, L), en ajoutant 1 à U(f) et en ajoutant à la fin de L la charge occupant la $(U(f)+1)^{ème}$ position dans la séquence de charges contenues dans le $f^{ème}$ dispositif tampon source ;
- ii- calcul d'une valeur de désordre d de la liste $L_N$ du nouvel état $e_N$, avec ladite fonction de calcul de désordre par rapport à un ordre croissant des numéros d'ordre de destination ;
- iii- si E2 contient un autre nouvel état $e_{Nbis}$=($U_{Nbis},L_{Nbis}$), avec $U_{Nbis}$= $U_N$ et $d_{bis}$ une valeur de désordre de la liste $L_{Nbis}$ : si d<$d_{bis}$, $e_N$ remplace $e_{Nbis}$ dans E2, et si d≥$d_{bis}$, $e_N$ n'est pas inséré dans E2 ;
- iv- si E2 ne contient pas ledit autre nouvel état $e_{Nbis}$, $e_N$ est inséré dans E2 ;

(c.2) si l'étape de construction n'est pas la $n^{ème}$ étape de construction : E2 devient le nouvel ensemble E1 et passage à l'étape de construction suivante ;
(c.3) si l'étape de construction est la $n^{ème}$ étape de construction : E2 contient un unique état final $e_F$=($U_F,L_F$) et $L_F$ forme ladite liste de collecte $L_C$.

Ainsi, le système de pilotage peut construire la liste de collecte avec un résultat optimal et de manière simple, automatique et performante (temps de calcul, complexité, etc.).

Dans une deuxième mise en oeuvre, l'étape de construction de la liste de collecte $L_C$ comprend les étapes suivantes :

(A) construction d'au moins un ensemble G' comprenant k' dispositifs tampons sources, avec k'≥2 et k'<k ;
(B) pour le ou chaque ensemble G', construction d'une liste de collecte $L_C$' contenant n' charges à collecter et réduisant un désordre desdites n' charges calculé avec ladite fonction de calcul de désordre par rapport à un ordre croissant des numéros d'ordre de destination, lesdites n' charges étant contenues dans les k' dispositifs tampons sources, $n' = \sum_{i=1}^{i=k'} p(i)$ , avec p(i) un nombre de charges à collecter dans le $i^{ème}$ des k' dispositifs tampons sources ;
(C) modification de l'ensemble G en remplaçant, pour le ou chaque ensemble G', les k' dispositifs tampons sources par un dispositif tampon source fictif contenant les n' charges dans l'ordre de ladite liste de collecte $L_C$' ;
(D) si l'ensemble G modifié comprend plusieurs dispositifs tampons sources, réitérations des étapes (A) à (D) avec l'ensemble G modifié ; si l'ensemble G modifié comprend un seul dispositif tampon source, ladite liste de collecte $L_C$' forme ladite liste de collecte $L_C$.

De cette façon, plutôt que de construire directement la liste de collecte $L_C$ en exécutant un algorithme global impliquant les k dispositifs tampons sources et les n charges qu'ils contiennent (cas de la première mise en oeuvre), la deuxième mise en oeuvre repose sur une construction itérative de la liste de collecte $L_C$ avec à chaque itération la construction d'une ou plusieurs listes de collecte $L_C$' (contenant chacune n' charges contenues dans k' dispositifs tampons sources, avec k'≥2 et k'<k). Ainsi, on peut obtenir un résultat en un temps meilleur (c'est-à-dire dans un délai plus court) qu'avec la première mise en oeuvre.

A l'étape (A), il est possible de construire plusieurs ensembles G' comprenant chacun k' dispositifs tampons sources, si les différents ensembles G' n'ont aucun dispositif tampon source en commun. Dans ce cas, à l'étape (B), les différents ensembles G' peuvent être traités en parallèle pour construire les différentes listes $L_C$' (qui s-vont ensuite être utilisées à l'étape (C)) et ainsi réduire encore les temps de calcul.

Selon une caractéristique particulière de la deuxième mise en oeuvre, la construction, pour le ou chaque ensemble G', d'une liste de collecte $L_C$' comprend les étapes suivantes :

(a) initialisation d'un premier ensemble d'états E1' avec un unique état $e'_{init}$=($U'_{init}, L'_{init}$), où $U'_{init}$ est un k'-uplet contenant k' zéros et $L'_{init}$ est une liste vide ;
(b) initialisation d'un deuxième ensemble d'états E2' avec une valeur vide ;

(c) pour chaque étape de construction parmi n' étapes de construction successives :

(c.1) pour chaque état e' de E1', avec e'=(U', L'), où U' est un k'-uplet contenant k' éléments, U'=$(z_1, ..., z_{k'})$ avec $z_i$ un nombre de charges prises dans le i[ème] des k' dispositifs tampons sources, $i \in \{1, ..., k\}$, et L' est une liste de charges associée à U' :
(c.1.1) pour chaque valeur de $f \in \{1, ..., k\}$ :
(c.1.1.1) si U'(f)<p(f), avec U'(f) un nombre de charges du f[ème] dispositif tampon source contenues dans L', et p(f) le nombre de charges à collecter dans le f[ème] dispositif tampon source :

- i- création d'un nouvel état e'$_N$=(U'$_N$,L'$_N$) en partant de e'=(U', L'), en ajoutant 1 à U'(f) et en ajoutant à la fin de L' la charge occupant la (U'(f)+1)[ème] position dans la séquence de charges contenues dans le f[ème] dispositif tampon source ;
- ii- calcul d'une valeur de désordre d' de la liste L'$_N$ du nouvel état e'$_N$, avec ladite fonction de calcul de désordre par rapport à un ordre croissant des numéros d'ordre de destination ;
- iii- si E2' contient un autre nouvel état e'$_{Nbis}$=(U'$_{Nbis}$,L'$_{Nbis}$), avec U'$_{Nbis}$= U'$_N$ et d'$_{bis}$ une valeur de désordre de la liste L'$_{Nbis}$ : si d'<d'$_{bis}$, e'$_N$ remplace e'$_{Nnis}$ dans E2', et si d'≥d$_{bis}$, e'$_N$ n'est pas inséré dans E2' ;
- iv- si E2' ne contient pas ledit autre nouvel état e'$_{Nbis}$, e'$_N$ est inséré dans E2' ;

(c.2) si l'étape de construction n'est pas la n[ème] étape de construction : E2' devient le nouvel ensemble E1' et passage à l'étape de construction suivante ;
(c.3) si l'étape de construction est la n[ème] étape de construction : E2' contient un unique état final e'$_F$=(U'$_F$,L'$_F$) et L'$_F$ forme ladite liste de collecte L$_C$'.

De cette façon, on obtient avec une durée de calcul très courte une solution réalisable. Et même si celle-ci n'est pas optimale, le désordre de la liste de collecte L$_C$ obtenue ne s'éloigne que très peu du désordre optimal. A titre de comparaison, la première mise en oeuvre donne un résultat optimal, mais nécessite une durée de calcul qui augmente significativement avec l'augmentation de k et n (on est en-dessous de 0,2 seconde uniquement jusqu'à trois allées ou jusqu'à une trentaine de charges).

Selon une caractéristique particulière de la deuxième mise en oeuvre, k'=2.

De cette façon, on peut améliorer significativement le temps de calcul et obtenir la liste de collecte L$_C$ dans un meilleur temps (c'est-à-dire dans un délai plus court).

Selon une caractéristique particulière de la deuxième mise en oeuvre, le procédé comprend en outre :

- au moins deux exécutions de l'étape de construction d'une liste de collecte L$_C$, avec au moins un ensemble G' différent d'une exécution à l'autre, chaque exécution fournissant un résultat ; et
- sélection d'un des résultats.

Ainsi, on obtient plusieurs listes de collecte L$_C$ et on conserve la meilleure (c'est-à-dire celle présentant le plus faible désordre).

Selon une caractéristique particulière de la deuxième mise en oeuvre, lesdites au moins deux exécutions et ladite sélection sont effectuées en appliquant une technique de recherche opérationnelle.

De cette façon, on évite de calculer tous les cas possibles (c'est-à-dire tous les ensembles G' possibles), et donc on réduit les calculs nécessaires, tout en pouvant approcher ou atteindre la solution optimale.

Selon une caractéristique particulière, à l'étape (c.1.1.1), le système de pilotage vérifie également si N(f)<y$_f$, avec N(f) la plus longue séquence de charges du f[ème] dispositif tampon source placées consécutivement dans L ou L', et y$_f$ un seuil prédéterminé. En outre, les étapes (i) à (iv) sont effectuées seulement d'une part si U(f)<p(f) ou U'(f)<p(f) et d'autre part si N(f)<y$_f$.

De cette façon, on limite le nombre de charges collectées consécutivement dans le même dispositif tampon source. Ceci permet d'équilibrer la provenance (en termes de sources et de dispositifs tampons sources) des charges dans la liste de collecte.

Selon une caractéristique particulière, l'étape -ii- est suivie de l'étape suivante :
-ii-bis- si d>d$_H$ ou d'>d'$_H$, avec d$_H$ et d'$_H$ des valeurs prédéterminées, le nouvel état e$_N$, respectivement e'$_N$, n'est pas inséré dans E2, respectivement E2', et les étapes (iii) et (iv) ne sont pas effectuées.

Ceci permet de simplifier les calculs effectués par le système de pilotage (moins d'états à gérer).

Selon une caractéristique particulière, la valeur prédéterminée d$_H$, respectivement d'$_H$, est calculée comme suit :

- construction d'une liste de référence L$_n$, respectivement L'$_H$, contenant lesdites n, respectivement n', charges et construite comme suit :

* la première charge de $L_H$, respectivement $L'_H$, est la charge ayant le plus petit numéro d'ordre de destination parmi les charges réellement prêtes à sortir des k, respectivement k', dispositifs tampons sources ;
* chaque charge suivante de $L_H$, respectivement $L'_H$, est la charge ayant le plus petit numéro d'ordre de destination parmi les charges qui seraient prêtes à sortir des k, respectivement k', dispositifs tampons sources en supposant fictivement que les charges précédentes de $L_H$, respectivement $L'_H$, sont sorties des k, respectivement k', dispositifs tampons sources ;

- calcul de $d_H$, respectivement $d'_H$, en tant que valeur de désordre de la liste $L_H$, respectivement $L'_H$,, avec ladite fonction de calcul de désordre.

Ainsi, pour calculer la valeur prédéterminée de désordre $d_H$ ou $d'_H$, on utilise une heuristique (méthode de calcul qui fournit rapidement une solution qui n'est pas nécessairement optimale). L'heuristique proposée est simple à mettre en oeuvre.

Dans une implémentation particulière, ladite fonction de calcul de désordre, pour une liste M de q charges, s'écrit : $$H(M) = \sum_{i=1}^{i=q}[(i-1) - K(i)]$$ , avec K(i) le nombre de charges de la liste M placées avant la $i^{ème}$ charge de la liste M et ayant un numéro d'ordre de destination inférieur ou égal au numéro d'ordre de la $i^{ème}$ charge de la liste M.

La fonction de calcul de désordre H(M) offre une solution performante de calcul de désordre par rapport à un ordre croissant strict (par exemple « 1 2 3 4 5 ») ou non strict (par exemple « 1 1 2 2 2 3 4 4 5 ») des numéros d'ordre de destination.

Dans des variantes d'implémentation, d'autres fonctions de calcul de désordre peuvent être utilisées (voir plus bas).

Selon une caractéristique particulière, les charges d'une commande donnée doivent parvenir à une destination donnée dans un ordre de destination donné croissant, et ledit système de pilotage effectue une étape de commande d'au moins un dispositif de séquencement, placé entre le collecteur et ladite au moins une destination, pour une correction du désordre des n charges.

Ainsi, dans ce cas, la solution proposée permet de garantir le respect de l'ordre croissant des numéros d'ordre de destination des charges arrivant à la ou les destinations. En outre, comme déjà mentionné plus haut, la solution proposée permet dans ce cas de réduire le travail du système de stockage tampon et de séquencement de charges (par rapport à la troisième solution connue). En effet, le travail d'ordonnancement est effectué pour une partie par le mécanisme particulier de collecte par le collecteur des charges provenant des dispositifs tampons sources, et pour l'autre partie par le système de stockage tampon et de séquencement.

Selon une caractéristique particulière, le système de pilotage effectue l'étape suivante, avant l'étape de construction de la liste de collecte, pour au moins un groupe de R charges successives contenues dans un des dispositifs tampons sources, avec R un entier supérieur ou égal à 2 : calcul d'un numéro d'ordre de destination de substitution en fonction des numéros d'ordre de destination des R charges. En outre, pour l'exécution de l'étape de construction de la liste de collecte, le système de pilotage utilise le numéro d'ordre de destination de substitution pour chacune des R charges.

De cette façon, les charges d'un même groupe de R charges vont se succéder dans la liste de collecte. Ceci permet de cadencer en conséquence, par exemple pour respecter des contraintes mécaniques performantes, l'entrée de ces R charges dans le dispositif tampon source concerné (et donc également la sortie de ces R charges hors de la source concernée).

Selon une caractéristique particulière, le calcul d'un numéro d'ordre de destination de substitution en fonction des numéros d'ordre de destination des R charges comprend :

- calcul d'une valeur moyenne des numéros d'ordre de destination des R charges ;
- calcul d'une valeur de désordre des R charges, en fonction des numéros d'ordre de destination des R charges ;
- si la valeur de désordre des R charges est supérieure à un seuil prédéterminé, le numéro d'ordre de destination de substitution est un arrondi de la valeur moyenne vers l'entier supérieur, sinon le numéro d'ordre de destination de substitution est un arrondi de la valeur moyenne vers l'entier inférieur.

Ceci permet de simplifier le calcul, effectué par le système de pilotage, d'un numéro d'ordre de destination de substitution.

Selon une caractéristique particulière, une nouvelle exécution des étapes du procédé est lancée si une entrée d'au moins une nouvelle charge dans un des dispositifs tampons sources provoque une modification des charges à collecter dans ledit dispositif tampon source, et donc des n charges à collecter dans l'ensemble des k dispositifs tampons sources.

De cette façon, la solution proposée peut être utilisée de manière dynamique, avec une nouvelle exécution du procédé dès qu'il y a un changement des n charges à collecter.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

Dans un autre mode de réalisation de l'invention, il est proposé un système automatisé de distribution de charges comprenant :

- k sources, avec k≥2 ;
- au moins une destination ;
- un ensemble G de k dispositifs tampons sources, de type « premier entré premier sorti », recevant chacun des charges provenant d'une des k sources ;
- un collecteur collectant les charges sortant des k dispositifs tampons sources et les transportant vers ladite au moins une destination, le collecteur comprenant k noeuds successifs configurés chacun pour collecter les charges sortant d'un des k dispositifs tampons sources ; et
- un système de pilotage configuré pour traiter des commandes, chaque commande listant des charges pour une destination donnée et associées chacune à un numéro d'ordre de destination ;

ledit système de pilotage comprenant une machine de calcul configurée pour :

- construire une liste de collecte $L_C$ contenant n charges à collecter et réduisant un désordre desdites n charges par rapport à un ordre croissant des numéros d'ordre de destination, lesdites n charges étant contenues dans les k dispositifs tampons sources, $n = \sum_{i=1}^{i=k} p(i)$ , avec p(i) un nombre de charges à collecter dans le i$^{\text{ème}}$ dispositif tampon source ; et
- commander le collecteur et les dispositifs tampons sources pour une collecte de charges sur le collecteur conforme à ladite liste de collecte $L_C$.

Avantageusement, le système de pilotage comprend des moyens de mise en oeuvre des étapes qu'il effectue dans le procédé de séquencement de charges tel que décrit précédemment, dans l'un quelconque de ses différents modes de réalisation.

## 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :

**[Fig. 1A]**
**[Fig. 1B]**
**[Fig. 1C]** Les figures 1A, 1B et 1C, déjà décrites en relation avec l'art antérieur, illustrent trois états (charges avant collecte sur le collecteur, charges après collecte sur le collecteur et charges arrivant au poste de préparation après sortie du collecteur) du traitement d'une commande avec la première solution connue ;

**[Fig. 2]** La figure 2 présente un synoptique d'un exemple de système de distribution automatisé dans lequel peut être mis en oeuvre un procédé de séquencement de charges selon l'invention ;

**[Fig. 3]** La figure 3 présente un organigramme d'un procédé de séquencement de charges selon un mode de réalisation particulier de l'invention ;

**[Fig. 4]** La figure 4 présente la structure d'un système de pilotage selon un mode de réalisation particulier de l'invention.

**[Fig. 5]** La figure 5 illustre un algorithme d'une première mise en oeuvre particulière de l'étape 31 de la figure 3 (construction de la liste de collecte $L_C$) ;

**[Fig. 6]** La figure 6 illustre un exemple d'arbre d'états parcouru par l'algorithme de la figure 5 ;

**[Fig. 7A]**
**[Fig. 7B]**

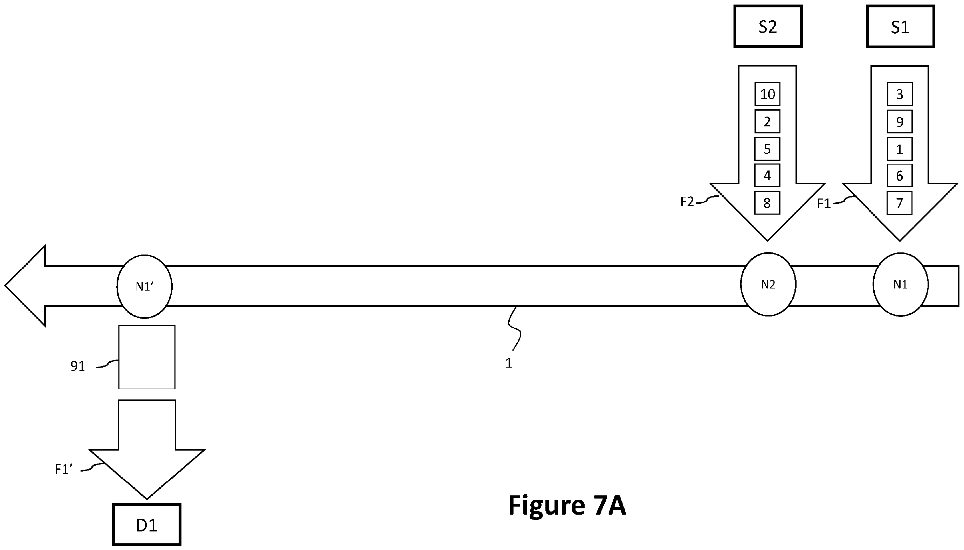

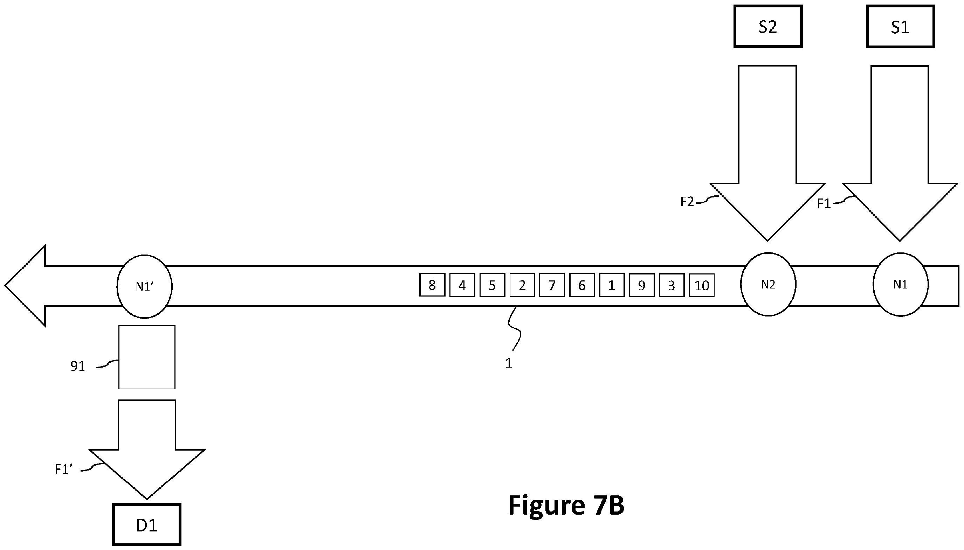

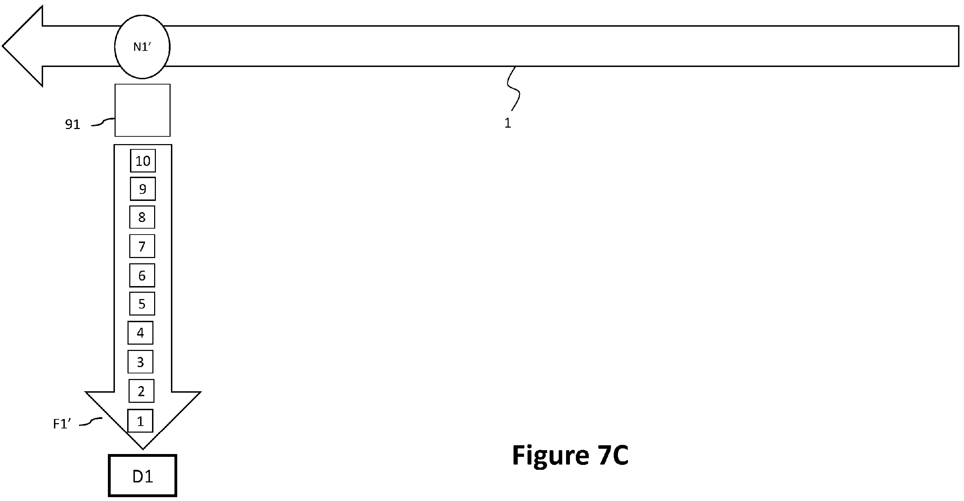

**[Fig. 7C]** Les figures 7A, 7B et 7C illustrent trois états (charges avant collecte sur le collecteur, charges après collecte sur le collecteur et charges après ordonnancement final) du traitement d'une commande avec un procédé de séquencement de charges selon l'invention, dans une première implémentation avec une destination unique ;

**[Fig. 8A]**

**[Fig. 8B]**

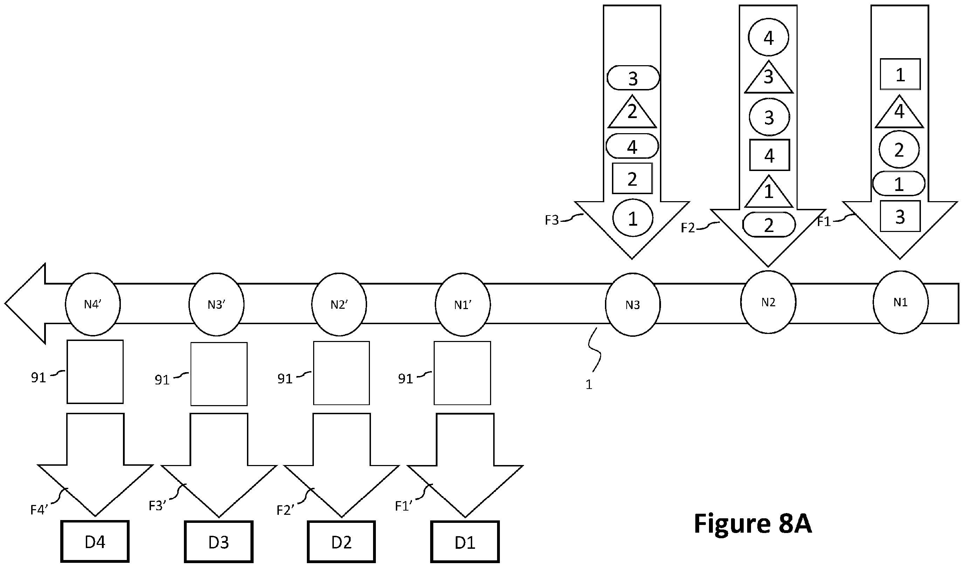

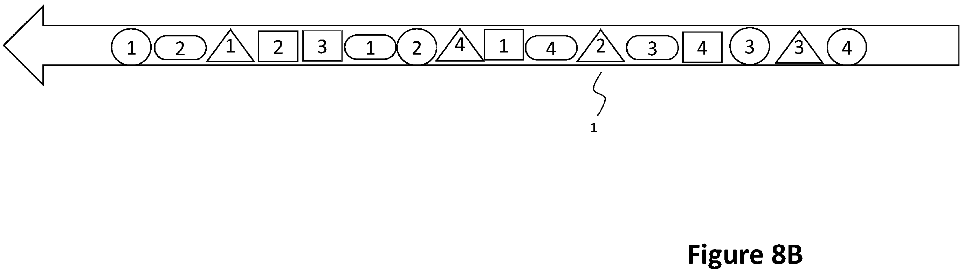

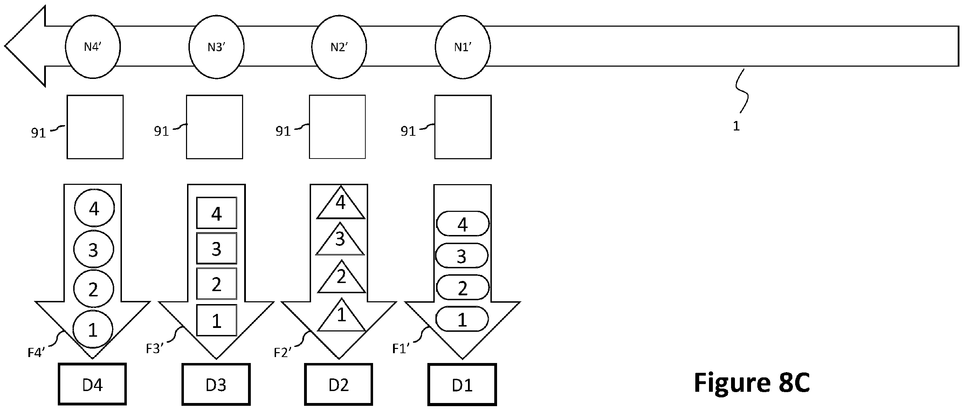

**[Fig. 8C]** Les figures 8A, 8B et 8C illustrent trois états (charges avant collecte sur le collecteur, charges après collecte sur le collecteur et charges après ordonnancement final) du traitement d'une commande avec un procédé de séquencement de charges selon l'invention, dans une deuxième implémentation avec plusieurs destinations ;

**[Fig. 9A]**

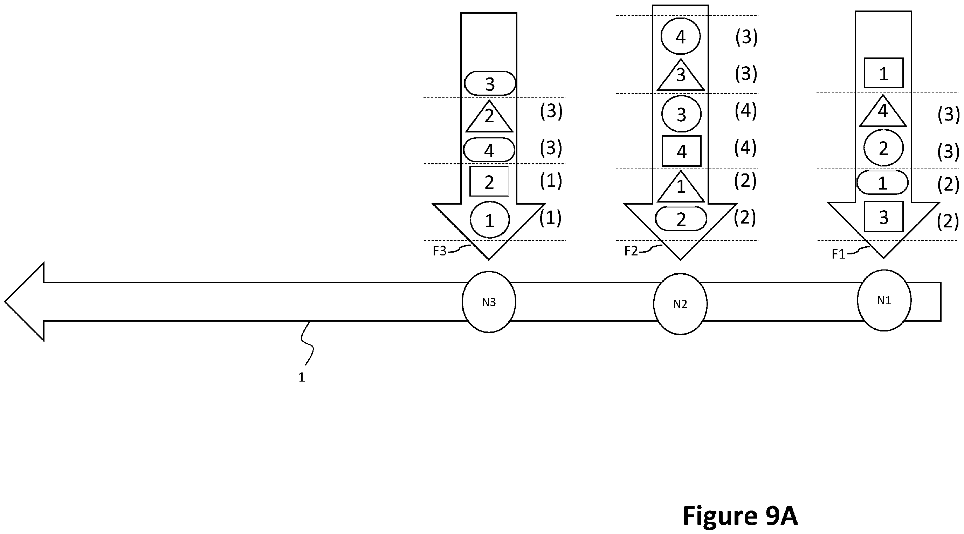

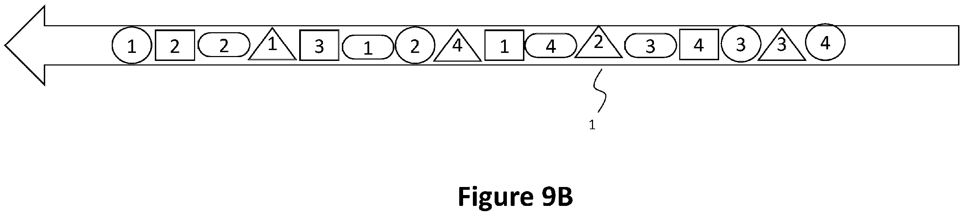

**[Fig. 9B]** Les figures 9A et 9B illustrent deux états (charges avant collecte sur le collecteur et charges après collecte sur le collecteur) du traitement d'une commande avec un procédé de séquencement de charges selon l'invention, dans une troisième implémentation avec utilisation de numéros d'ordre de destination de substitution ;

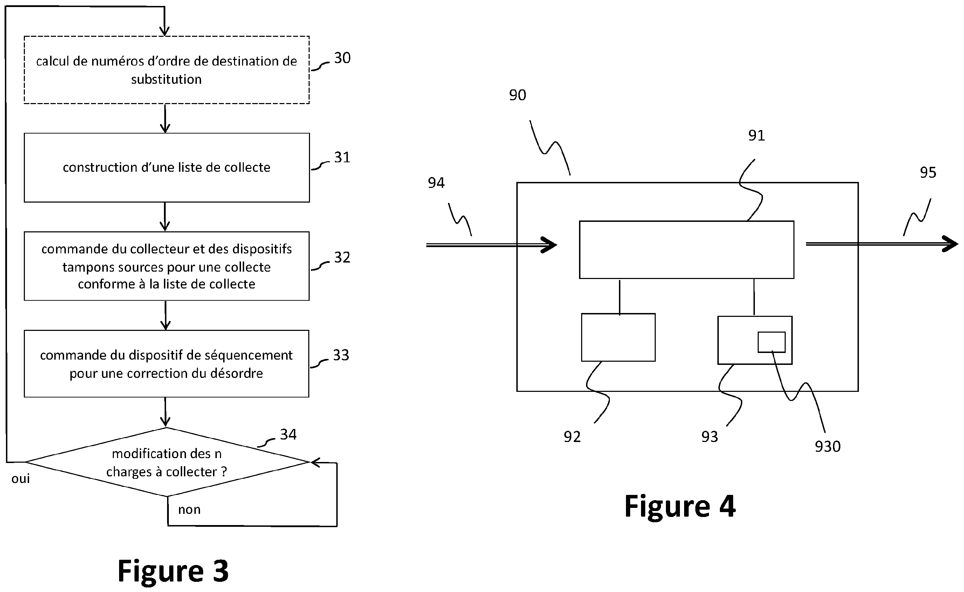

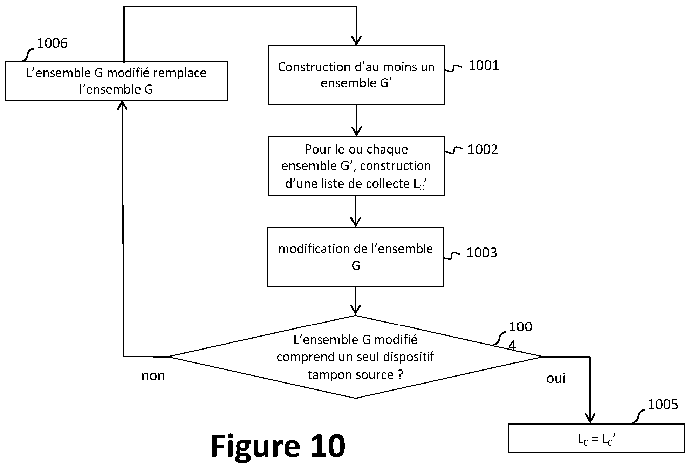

**[Fig. 10]** La figure 10 illustre un algorithme d'une deuxième mise en oeuvre particulière de l'étape 31 de la figure 3 (construction de la liste de collecte $L_C$) ;

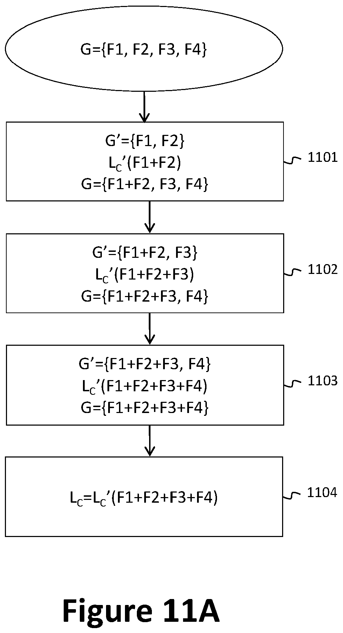

**[Fig. 11A]** La figure 11A présente un premier exemple d'application de la deuxième mise en oeuvre de la figure 10, avec un ensemble G de quatre dispositifs tampons sources F1 à F4 et k'=2 ;

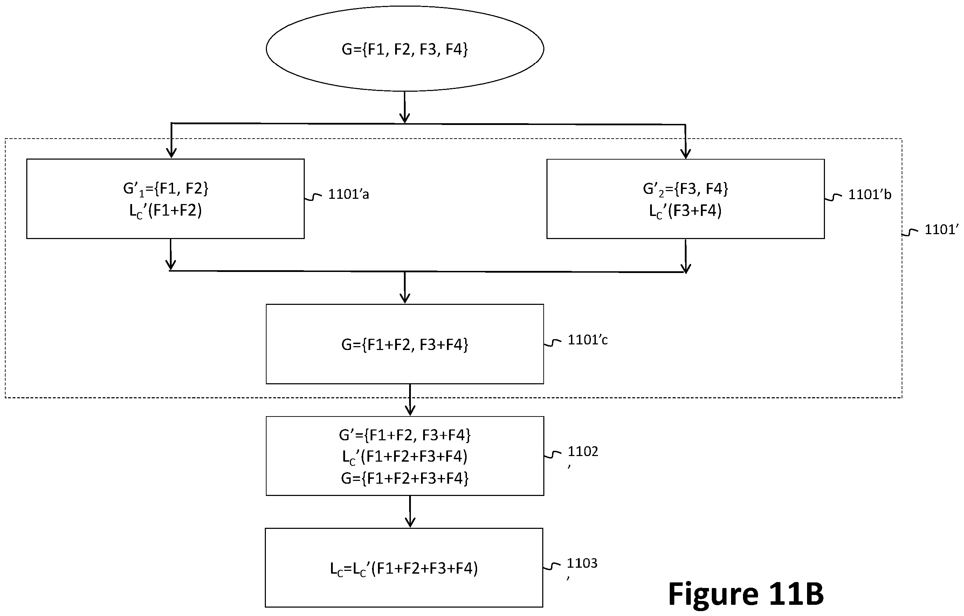

**[Fig. 11B]** La figure 11B présente un deuxième exemple d'application de la deuxième mise en oeuvre de la figure 10, avec un ensemble G de quatre dispositifs tampons sources F1 à F4 et k'=2 ;

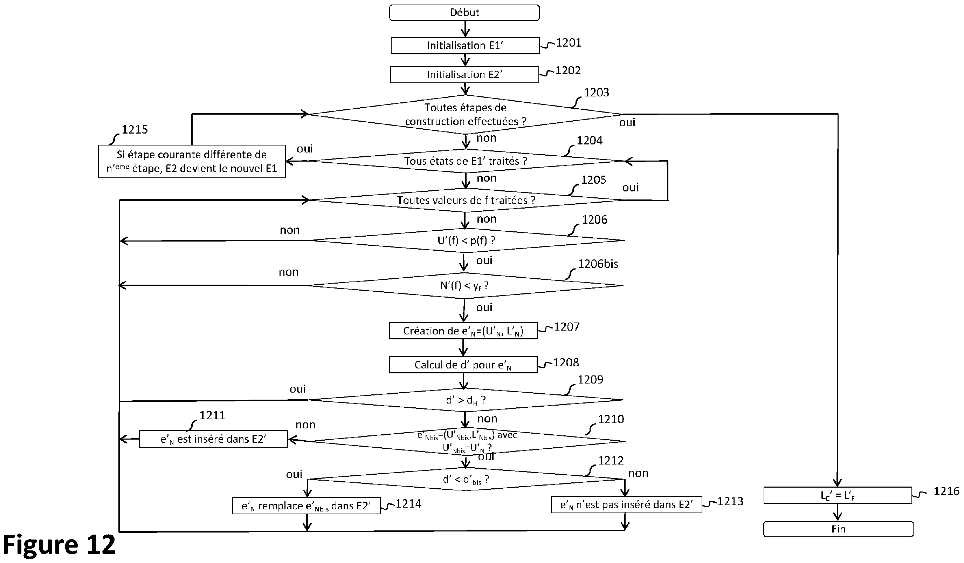

**[Fig. 12]** La figure 12 illustre un algorithme d'une réalisation particulière, au sein de l'étape 1002 de la figure 10, de la construction d'une liste de collecte $L_C$' pour un ensemble G' de k' dispositifs tampons sources ;

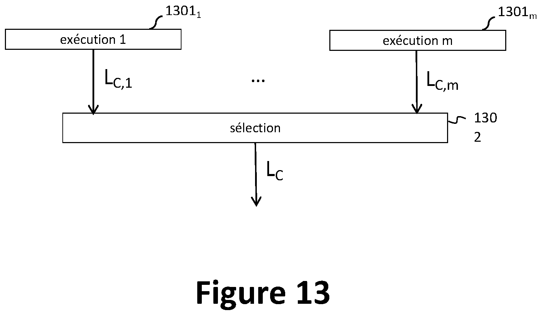

**[Fig. 13]** La figure 13 illustre un algorithme d'une troisième mise en oeuvre particulière de l'étape 31 de la figure 3 (construction de la liste de collecte $L_C$) ;

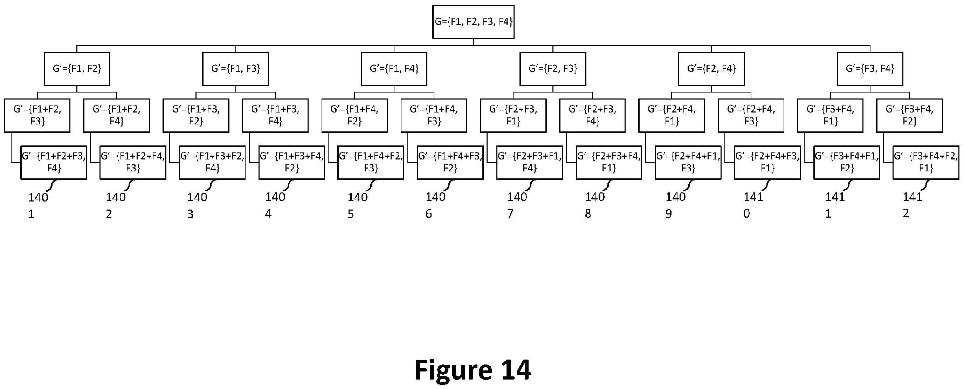

**[Fig. 14]** La figure 14 illustre une pluralité de combinaisons possibles d'ensembles G' de k'=2 dispositifs tampons sources (chacun étant réel ou fictif), dans le cas d'un ensemble G de quatre dispositifs tampons sources F1 à F4.

## 5. DESCRIPTION DÉTAILLÉE

Sur toutes les figures du présent document, les éléments et étapes identiques sont désignés par une même référence numérique.

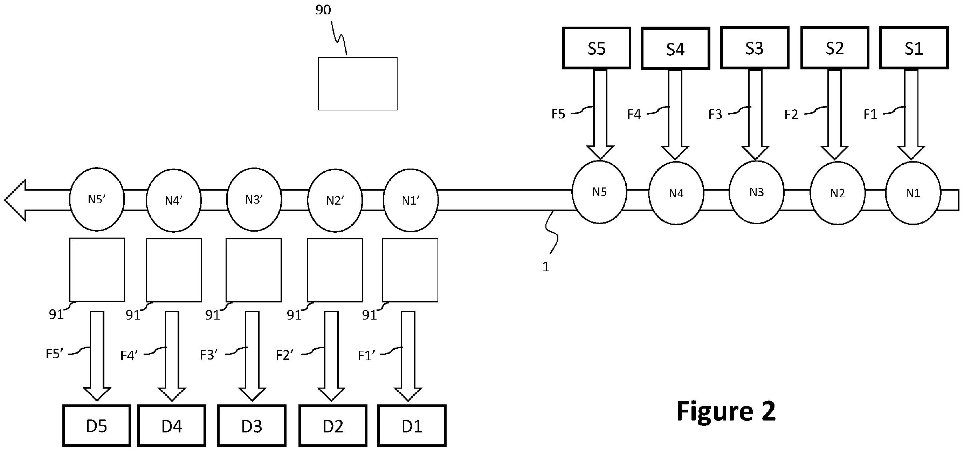

La **figure 2** présente un synoptique d'un exemple de système de distribution automatisé dans lequel peut être mis en oeuvre un procédé de séquencement de charges selon l'invention. Dans cet exemple, le système comprend cinq sources S1 à S5 (par exemple différentes parties (ensembles de rangement) d'un magasin de stockage), cinq destinations D1 à D5 (par exemple des postes de préparation de commande), un collecteur 1 (composé par exemple d'un ou plusieurs convoyeurs), des systèmes (ou dispositifs) de stockage tampon et de séquencement 91 et un système de pilotage 90 (par exemple de type WCS). Cet exemple est purement illustratif quant au nombre de sources et au nombre de destinations. Plus généralement, le système comprend k sources, avec k≥2, et au moins une destination.

Comme déjà expliqué plus haut, le collecteur 1 est configuré pour transporter des charges jusqu'à chaque destination et comprend une pluralité de noeuds successifs, ceux référencés N1 à N5 sont configurés chacun pour collecter des charges sortant d'une des sources S1 à S5, et ceux référencés N1' à N5' sont configurés chacun pour diriger des charges vers une des destinations D1 à D5. Chacun de ces noeuds comprend par exemple un dispositif de transfert à 90° ou 45°

Chacune des sources S1 à S5 est par exemple reliée à l'un des noeuds N1 à N5 par un dispositif tampon source de type FIFO F1 à F5. De même, chacune des destinations D1 à D5 est par exemple reliée à l'un des noeuds N1' à N5' par un dispositif tampon destination de type FIFO F1' à F5'.

En amont de chaque destination, un système de stockage tampon et de séquencement 91 permet un ordonnancement final des charges, dans un ordre de destination croissant pour cette destination. Comme détaillé plus bas, on admet qu'à l'issue de la collecte des charges sur le collecteur, celles-ci présentent un désordre (par rapport à l'ordre de destination croissant). Les systèmes de stockage tampon et de séquencement 91 permettent de supprimer ce désordre.

Dans une variante, la contrainte est plus souple au niveau des destinations, et on admet que l'ordre croissant des numéros d'ordre de destination ne soit pas respecté par les charges parvenant à chaque destination. Dans cette variante, le système de stockage tampon et de séquencement 91 en amont de chaque destination est soit omis (non présent), soit utilisé pour effectuer un ordonnancement final pouvant n'être que partiel (c'est-à-dire ne faisant parfois que réduire le désordre précité, sans le supprimer).

Dans une autre variante, il n'y a pas un système de stockage tampon et de séquencement 91 juste en amont de chaque destination (et en aval du collecteur 1), mais un unique système de stockage tampon et de séquencement 91 (en amont de l'ensemble des destinations).

Le système de pilotage 90 est configuré pour traiter des commandes listant chacune des charges à extraire des sources et, idéalement (cf. discussion ci-dessus), à fournir dans un ordre de destination croissant donné à une destination donnée.

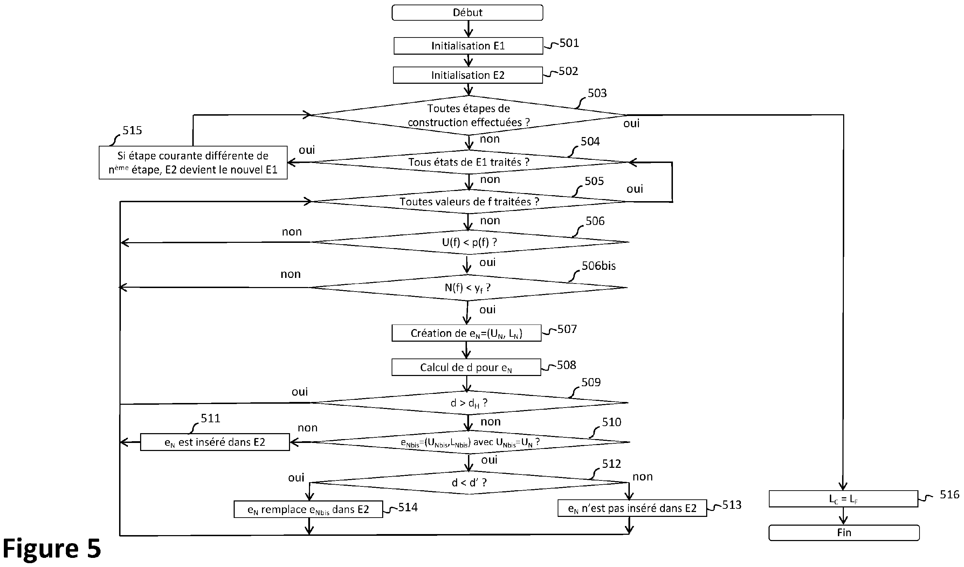

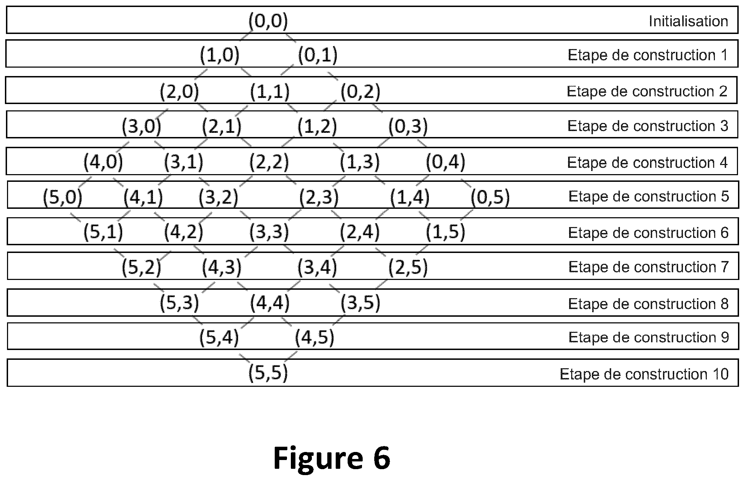

Il met par exemple en oeuvre le procédé de séquencement de charges selon une des mises en oeuvre particulières décrites plus bas en relation avec les figures 5 et 6 (première mise en oeuvre), avec les figures 10 et 12 (deuxième mise en oeuvre) ou avec la figure 13 (troisième mise en oeuvre).

On présente maintenant, en relation avec la **figure 3,** un procédé de séquencement de charges selon un mode de réalisation particulier de l'invention. Il est mis en oeuvre par le système de pilotage 90.

Dans une étape 31, le système de pilotage 90 construit une liste de collecte $L_C$ contenant n charges à collecter et réduisant un désordre des n charges (calculé avec une fonction de calcul de désordre) par rapport à un ordre croissant des numéros d'ordre de destination. Les n charges sont contenues dans les dispositifs tampons sources F1 à F5. On a : $n = \sum_{i=1}^{i=k} p(i)$ , avec p(i) un nombre de charges à collecter dans le $i^{ème}$ dispositif tampon source. Une mise en oeuvre particulière de cette étape 31 de construction de la liste de collecte est décrite plus bas, en relation avec la figure 5. Sont également décrites plus bas : une deuxième mise en oeuvre en relation avec les figures 10 et 12 et une troisième mise en oeuvre en relation avec la figure 13.

Dans une étape 32, le système de pilotage 90 commande le collecteur 1 et les dispositifs tampons sources F1 à F5 pour qu'une collecte de charges (sur le collecteur) soit effectuée conformément à la liste de collecte.

Si les charges d'une commande donnée doivent parvenir à une destination donnée dans un ordre de destination donné croissant, une étape 33 est effectuée dans laquelle le système de pilotage 90 commande les systèmes de stockage tampon et de séquencement 91 pour une correction du désordre des n charges.

Dans une étape de test 34, le système de pilotage 90 vérifie si une entrée d'au moins une nouvelle charge dans un des dispositifs tampons sources F1 à F5 provoque une modification des charges à collecter dans ce dispositif tampon source, et donc des n charges à collecter dans l'ensemble des k dispositifs tampons sources. En cas de réponse positive à l'étape de test 34 (c'est-à-dire en cas de modification de l'ensemble des n charges à collecter), le système de pilotage 90 lance une nouvelle exécution des étapes du procédé.

Dans une variante, le procédé de séquencement de charges comprend une étape préalable 30, qui est décrite plus bas en relation avec les figures 9A et 9B.

La **figure 4** présente la structure du système de pilotage 90 selon un mode de réalisation particulier de l'invention. Ce système de pilotage comprend une mémoire vive 92 (par exemple une mémoire RAM), une unité de traitement 91, équipée par exemple d'un processeur, et pilotée par un programme d'ordinateur 930 stocké dans une mémoire morte 93 (par exemple une mémoire ROM ou un disque dur).

A l'initialisation, les instructions de code du programme d'ordinateur sont par exemple chargées dans la mémoire vive 92 avant d'être exécutées par le processeur de l'unité de traitement 91, pour mettre en oeuvre le procédé de séquencement de charges de l'invention (par exemple selon le mode de réalisation de la figure 3, dans l'une quelconque de ses mises en oeuvre). L'unité de traitement 91 reçoit en entrée des commandes 94. Le processeur de l'unité de traitement 91 traite les commandes et génère en sortie des instructions ou commandes 95 permettant de piloter (commander) différents éléments compris dans le système de distribution automatisé, notamment les sources S1 à S5, les dispositifs tampons sources de type FIFO F1 à F5, le collecteur 1, les destinations D1 à D5, les dispositifs tampons destinations de type FTFO F1' à F5' et les systèmes de stockage tampon et de séquencement 91.

Cette figure 4 illustre seulement une manière particulière, parmi plusieurs possibles, de réaliser la technique de l'invention, dans l'un quelconque de ses modes de réalisation. En effet, le système de pilotage se réalise indifféremment sur une machine de calcul reprogrammable (par exemple un ordinateur PC, un processeur DSP, un microcontrôleur, etc.) exécutant un programme comprenant une séquence d'instructions, ou sur une machine de calcul dédiée (par exemple un ensemble de portes logiques comme un FPGA ou un ASIC, ou tout autre module matériel).

Dans le cas où le système de pilotage est réalisé avec une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

La **figure 5** illustre un algorithme d'une première mise en oeuvre particulière de l'étape 31 de la figure 3 (construction de la liste de collecte $L_C$).

Dans une étape 501, le système de pilotage initialise un premier ensemble d'états E1 avec un unique état $e_{init}=(U_{init}, L_{init})$, où $U_{init}$ est un k-uplet contenant k zéros et $L_{int}$ est une liste vide.

Dans une étape 502, le système de pilotage initialise un deuxième ensemble d'états E2 avec une valeur vide.

Dans une étape de test 503, le système de pilotage vérifie si n étapes de construction successives (c'est-à-dire toutes) ont été effectuées.

En cas de réponse positive à l'étape de test 503, le système de pilotage passe à l'étape 516 dans laquelle il obtient la liste de collecte $L_C$ à partir d'un unique état final $e_F=(U_F,L_{,F})$ contenu dans E2. En effet, il prend $L_F$ comme liste de collecte $L_C$.

En cas de réponse négative à l'étape de test 503, le système de pilotage commence le traitement de l'étape de construction suivante en passant à l'étape de test 504 dans laquelle il vérifie si tous les états de E1 ont été traités. Chaque état e de E1 s'écrit e=(U, L), où U est un k-uplet contenant k éléments, $U=(z_1, ..., z_k)$ avec $z_i$ un nombre de charges prises dans le $i^{ème}$ dispositif tampon source, $i \in \{1, ..., k\}$, et L est une liste de charges associée à U.

En cas de réponse positive à l'étape de test 504, le système de pilotage passe à l'étape 515 dans laquelle, si l'étape de construction n'est pas la $n^{ème}$ étape de construction, E2 devient le nouvel ensemble E1, puis le système de pilotage revient à l'étape 503 (pour le passage à l'étape de construction suivante).

En cas de réponse négative à l'étape de test 504, le système de pilotage prend un état de E1 non traité et passe à l'étape de test 505 dans laquelle il vérifie si toutes les valeurs de f ont été traitées, avec $f \in \{1, ..., k\}$.

En cas de réponse positive à l'étape de test 505, le système de pilotage revient à l'étape 504. En cas de réponse négative à l'étape de test 505, le système de pilotage prend une valeur de f non traitée et passe à l'étape de test 506 dans laquelle il vérifie si $U(f)<p(f)$, avec $U(f)$ un nombre de charges du $f^{ème}$ dispositif tampon source contenues dans L, et $p(f)$ le nombre de charges à collecter dans le $f^{ème}$ dispositif tampon source.

En cas de réponse négative à l'étape de test 506, le système de pilotage revient à l'étape 505. En cas de réponse positive à l'étape de test 506, le système de pilotage passe à l'étape de test 506bis dans laquelle il vérifie si $N(f)<y_f$, avec $N(f)$ un nombre maximal de charges du $f^{ème}$ dispositif tampon source placées consécutivement dans L, et $y_f$ une valeur prédéterminée (par exemple, $y_f=6$).

En cas de réponse négative à l'étape de test 506bis, le système de pilotage revient à l'étape 505. En cas de réponse positive à l'étape de test 506bis, le système de pilotage passe à l'étape 507 dans laquelle il crée un nouvel état $e_N=(U_N,L_N)$ en partant de e=(U, L), en ajoutant 1 à $U(f)$ et en ajoutant à la fin de L la charge occupant la $(U(f)+1)^{ème}$ position dans la séquence de charges contenues dans le $f^{ème}$ dispositif tampon source.

L'étape 507 est suivie de l'étape 508 dans laquelle le système de pilotage calcule une valeur de désordre d de la liste $L_N$ du nouvel état $e_N$, avec une fonction de calcul de désordre par rapport à un ordre croissant des numéros d'ordre de destination.

Dans un mode de réalisation particulier de l'étape 508, le système de pilotage utilise une fonction de calcul de désordre qui, pour une liste M de q charges, s'écrit :

**[Equation 1]**

$$H(M) = \sum_{i=1}^{i=q} [(i - 1) - K(i)]$$

avec $K(i)$ le nombre de charges de la liste M placées avant la $i^{ème}$ charge de la liste M et ayant un numéro d'ordre de destination inférieur ou égal au numéro d'ordre de la $i^{ème}$ charge de la liste M.

D'autres fonctions de calcul de désordre peuvent être utilisées sans sortir du cadre de la présente invention, notamment mais non exclusivement :

**[Equation 2]**

$$B(M) = MAX\left(K(i)\right), i \in \{1, ..., q\}$$

avec $K(i)$ tel que défini plus haut.

**[Equation 3]**

$$F(M) = \sum_{i=1}^{i=q} |(A(i) - i|$$

avec $A(i)$ la position qu'occuperait la $i^{ème}$ charge de la liste M si les q charges de la liste M étaient réordonnés selon un ordre croissant des numéros d'ordre de destination.

**[Equation 4]**

$$G(M) = MAX\left(|(A(i) - i|\right), i \in \{1, ..., q\}$$

avec $A(i)$ tel que défini plus haut.

Par exemple, avec M=(3,1,8,4,7,2,6,5), on obtient :

- $$H(M) = ([(1\text{-}1)\text{-}0] + [(2\text{-}1)\text{-}0] + [(3\text{-}1)\text{-}2] + [(4\text{-}1)\text{-}2] + [(5\text{-}1)\text{-}3] + [(6\text{-}1)\text{-}1] +$$
  $$[(7\text{-}1)\text{-}4] + [(8\text{-}1)\text{-}4]) = 12$$

- $B(M) = 4$

- $$F(M) = (|3\text{-}1| + |1\text{-}2| + |8\text{-}3| + |4\text{-}4| + |7\text{-}5| + |2\text{-}6| + |6\text{-}7| + |5\text{-}8|) = 18$$

- $G(M) = 5$

L'étape 508 est suivie de l'étape de test 509 dans laquelle le système de pilotage vérifie si $d > d_H$, avec $d_H$ une valeur prédéterminée.

Dans un mode de réalisation particulier de l'étape 509, la valeur prédéterminée $d_H$ est calculée comme suit :

- construction d'une liste de référence $L_H$ contenant les n charges et construite comme suit :

  ○ la première charge de $L_H$ est la charge ayant le plus petit numéro d'ordre de destination parmi les charges réellement prêtes à sortir des k dispositifs tampons sources ;
  ○ chaque charge suivante de $L_H$ est la charge ayant le plus petit numéro d'ordre de destination parmi les charges qui seraient prêtes à sortir des k dispositifs tampons sources en supposant fictivement que les charges précédentes de $L_H$ sont sorties des k dispositifs tampons sources ;

- calcul de $d_H$, en tant que valeur de désordre de la liste $L_H$, avec la fonction de calcul de désordre.

En cas de réponse positive à l'étape de test 509, le système de pilotage revient à l'étape 505. En cas de réponse négative à l'étape de test 509, le système de pilotage passe à l'étape de test 510 dans laquelle il vérifie si E2 contient un autre nouvel état $e_{Nbis} = (U_{Nbis}, L_{Nbis})$, avec $U_{Nbis} = U_N$ et $d_{bis}$ une valeur de désordre de la liste $L_{Nbis}$.

En cas de réponse positive à l'étape de test 510, le système de pilotage passe à l'étape 512 dans laquelle il vérifie si $d < d_{bis}$. En cas de réponse positive à l'étape de test 512, le système de pilotage passe à l'étape 514 dans laquelle il remplace $e_{Nbis}$ par $e_N$ dans E2. En cas de réponse négative à l'étape de test 512, le système de pilotage passe à l'étape 513 dans laquelle il n'insère pas $e_N$ dans E2. A l'issue de l'étape 513 ou de l'étape 514, le système de pilotage revient à l'étape 505.

En cas de réponse négative à l'étape de test 510, le système de pilotage passe à l'étape 511 dans laquelle il insère $e_N$ dans E2, puis il revient à l'étape 505.

On présente maintenant, en relation avec la **figure 6** et les **figures 7A, 7B et 7C,** le traitement d'une commande avec un procédé de séquencement de charges selon l'invention, dans une première implémentation avec une destination unique. Les figures 7A, 7B et 7C illustrent respectivement les trois états suivants de ce traitement : charges avant collecte sur le collecteur, charges après collecte sur le collecteur et charges après ordonnancement final.

Dans cet exemple, on suppose qu'il a deux sources S1 et S2 et une destination D1. La commande à traiter liste les charges suivantes : 1, 2, 3, 4, 5, 6, 7, 8, 9 et 10 (sur les figures, les charges sont référencées par leur numéro d'ordre de destination).

Comme illustré sur la figure 7A, le dispositif tampon source F1 (en aval de la source S1) contient cinq charges selon la séquence suivante : 7, 6, 1, 9 et 3. Le dispositif tampon source F2 (en aval de la source S2) contient cinq charges selon la séquence suivante : 8, 4, 5, 2 et 10. On a donc, n=10, p(1)=5 et p(2)=5.

Les résultats de l'étape d'initialisation de E1 et des n étapes de construction, décrites plus haut en relation avec la figure 5, sont les suivants (en prenant H(M) comme fonction de calcul de la valeur de désordre d) :

Etape d'initialisation de E1
état $e_{00}$ = [U=(0,0) ; L=()] ; d=0
Etape de construction 1

état $e_{10}$ = [U=(1,0) ; L=(8)] ; d=0
état $e_{01}$ = [U=(0,1) ; L=(7)] ; d=0

Etape de construction 2

état $e_{20}$ = [U=(2,0) ; L=(8,4)] ; d=1
état $e_{11}$ = [U=(1,1) ; L=(7,8)] ; d=0
état $e_{11bis}$ = [U=(1,1) ; L=(8,7)] ; d=1 (non conservé)
état $e_{02}$ = [U=(0,2) ; L=(7,6)] ; d=1

Etape de construction 3

état $e_{30}$ = [U=(3,0) ; L=(8,4,5)] ; d=2
état $e_{21}$ = [U=(2,1) ; L=(8,4,7)] ; d=2
état $e_{21bis}$ = [U=(2,1) ; L=(7,8,4)] ; d=2 (non conservé)
état $e_{12}$ = [U=(1,2) ; L=(7,8,6)] ; d=2 (non conservé)
état $e_{12bis}$ = [U=(1,2) ; L=(7,6,8)] ; d=1
état $e_{03}$ = [U=(0,3) ; L=(7,6,1)] ; d=3

Etape de construction 4

état $e_{40}$ = [U=(4,0) ; L=(8,4,5,2)] ; d=5
état $e_{31}$ = [U=(3,1) ; L=(8,4,5,7)] ; d=3
état $e_{31bis}$ = [U=(3,1) ; L=(8,4,7,5)] ; d=4 (non conservé)
état $e_{22}$ = [U=(2,2) ; L=(8,4,7,6)] ; d=4
état $e_{22bis}$ = [U=(2,2) ; L=(7,6,8,4)] ; d=4 (non conservé)
état $e_{13}$ = [U=(1,3) ; L=(7,6,8,1)] ; d=4 (non conservé)
état $e_{13bis}$ = [U=(1,3) ; L=(7,6,1,8)] ; d=3
état $e_{04}$ = [U=(0,4) ; L=(7,6,1,9)] ; d=3

Etape de construction 5

état $e_{50}$ = [U=(5,0) ; L=(8,4,5,2,10)] ; d=5
état $e_{41}$ = [U=(4,1) ; L=(8,4,5,2,7)] ; d=6
état $e_{41bis}$ = [U=(4,1) ; L=(8,4,5,7,2)] ; d=7 (non conservé)
état $e_{32}$ = [U=(3,2) ; L=(8,4,5,7,6)] ; d=5
état $e_{32bis}$ = [U=(3,2) ; L=(8,4,7,6,5)] ; d=7 (non conservé)
état $e_{23}$ = [U=(2,3) ; L=(8,4,7,6,1)] ; d=8 (non conservé)
état $e_{23bis}$ = [U=(2,3) ; L=(7,6,1,8,4)] ; d=6
état $e_{14}$ = [U=(1,4) ; L=(7,6,1,8,9)] ; d=3
état $e_{14bis}$ = [U=(1,4) ; L=(7,6,1,9,8)] ; d=4 (non conservé)
état $e_{05}$ = [U=(0,5) ; L=(7,6,1,9,3)] ; d=6

Etape de construction 6

état $e_{51}$ = [U=(5,1) ; L=(8,4,5,2,10,7)] ; d=7 (non conservé)
état $e_{51bis}$ = [U=(5,1) ; L=(8,4,5,2,7,10)] ; d=6
état $e_{42}$ = [U=(4,2) ; L=(8,4,5,2,7,6)] ; d=8
état $e_{42bis}$ = [U=(4,2) ; L=(8,4,5,7,6,2)] ; d=10 (non conservé)
état $e_{33}$ = [U=(3,3) ; L=(8,4,5,7,6,1)] ; d=10 (non conservé)
état $e_{33bis}$ = [U=(3,3) ; L=(7,6,1,8,4,5)] ; d=9
état $e_{24}$= [U=(2,4) ; L=(7,6,1,8,4,9)] ; d=6
état $e_{24bis}$ = [U=(2,4) ; L=(7,6,1,8,9,4)] ; d=7 (non conservé)
état $e_{15}$ = [U=(1,5) ; L=(7,6,1,8,9,3)] ; d=7
état $e_{15bis}$ = [U=(0,5) ; L=(7,6,1,9,3,8)] ; d=7 (non conservé)

Etape de construction 7

état $e_{52}$ = [U=(5,2) ; L=(8,4,5,2,7,10,6)] ; d=9 (non conservé)
état $e_{52bis}$ = [U=(5,2) ; L=(8,4,5,2,7,6,10)] ; d=8
état $e_{43}$ = [U=(4,3) ; L=(8,4,5,2,7,6,1)] ; d=14
état $e_{43bis}$ = [U=(4,3) ; L=(7,6,1,8,4,5,2)] ; d=14 (non conservé)
état $e_{34}$ = [U=(3,4) ; L=(7,6,1,8,4,5,9)] ; d=9

état $e_{34bis}$ = [U=(3,4) ; L=(7,6,1,8,4,9,5)] ; d=10 (non conservé)
état $e_{25}$ = [U=(2,5) ; L=(7,6,1,8,4,9,3)] ; d=11
état $e_{25bis}$ = [U=(2,5) ; L=(7,6,1,8,9,3,4)] ; d=11 (non conservé)

### Etape de construction 8

état $e_{53}$ = [U=(5,3) ; L=(8,4,5,2,7,6,10,1)] ; d=15 (non conservé)
état $e_{53bis}$ = [U=(5,3) ; L=(8,4,5,2,7,6,1,10)] ; d=14
état $e_{44}$ = [U=(4,4) ; L=(8,4,5,2,7,6,1,9)] ; d=14
état $e_{44bis}$ = [U=(4,4) ; L=(7,6,1,8,4,5,9,2)] ; d=15 (non conservé)
état $e_{35}$ = [U=(3,5) ; L=(7,6,1,8,4,5,9,3)] ; d=15
état $e_{35bis}$ = [U=(3,5) ; L=(7,6,1,8,4,9,3,5)] ; d=15 (non conservé)

### Etape de construction 9

état $e_{54}$ = [U=(5,4) ; L=(8,4,5,2,7,6,1,10,9)] ; d=15 (non conservé)
état $e_{54bis}$ = [U=(5,4) ; L=(8,4,5,2,7,6,1,9,10)] ; d=14
état $e_{45}$ = [U=(4,5) ; L=(8,4,5,2,7,6,1,9,3)] ; d=20
état $e_{45bis}$ = [U=(4,5) ; L=(7,6,1,8,4,5,9,3,2)] ; d=22 (non conservé)

### Etape de construction 10

état $e_{55}$ = [U=(5,5) ; L=(8,4,5,2,7,6,1,9,10,3)] ; d=21 (non conservé)
état $e_{55bis}$ = [U=(5,5) ; L=(8,4,5,2,7,6,1,9,3,10)] ; d=20

L'état $e_{55bis}$ est donc l'état final, dont la liste L=(8,4,5,2,7,6,1,9,3,10) est prise comme liste de collecte $L_C$. Ceci est illustré sur la figure 7B. Après remise en ordre (ordonnancement final) par le système de stockage tampon et de séquencement 91, on obtient la liste (1,2,3,4,5,6,7,8,9,10), comme illustré sur la figure 7C.

La figure 6 illustre l'arbre des états (et plus précisément des valeurs de U de ces états) parcourus dans cet exemple par l'algorithme de la figure 5.

On présente maintenant, en relation avec les **figures 8A, 8B et 8C,** le traitement d'une commande avec un procédé de séquencement de charges selon l'invention, dans une deuxième implémentation avec plusieurs destinations. Les figures 8A, 8B et 8C illustrent respectivement les trois états suivants de ce traitement : charges avant collecte sur le collecteur, charges après collecte sur le collecteur et charges après ordonnancement final.

Dans cet exemple, on suppose qu'il a trois sources S1, S2 et S3 et quatre destinations D1, D2, D3 et D4. Il y a quatre commandes à traiter, une pour chacune des destinations. Chacune de ces commandes liste quatre charges ayant les numéros d'ordre de destination suivants : 1, 2, 3 et 4. Sur les figures, les charges sont référencées par leur numéro d'ordre de destination, ainsi que par un code géométrique correspondant à leur destination (ovale pour D1, triangle pour D2, rectangulaire pour D3 et cercle pour D4).

Comme illustré sur la figure 8A, le dispositif tampon source F1 (en aval de la source S1) contient cinq charges selon la séquence suivante : 3r, 1o, 2c, 4t et 1r (où les lettres o, t, r et c correspondent respectivement à « ovale », « triangle », « rectangulaire » et « cercle », pour indiquer leur destination (D1, D2, D3 et D4 respectivement). Le dispositif tampon source F2 (en aval de la source S2) contient six charges selon la séquence suivante : 2o, 1t, 4r, 3c, 3t et 4c. Le dispositif tampon source F3 (en aval de la source S3) contient cinq charges selon la séquence suivante : 1c, 2r, 4o, 2t et 3o. On a donc, n=16, p(1)=5, p(2)=6 et p(3)=5.

La figure 8B illustre la liste de collecte obtenue en appliquant l'algorithme de la figure 5 : $L_C$=(1c, 2o, 1t, 2r, 3r, 1o, 2c, 4t, 1r, 4o, 2t, 3o, 4r, 3c, 3t, 4c). On note un désordre du fait du positionnement des charges 1r et 3o.

La figure 8C illustre les charges séquencées correctement dans les différents dispositifs tampons destinations F1' à F5', après remise en ordre (ordonnancement final) par les systèmes de stockage tampon et de séquencement 91.

On présente maintenant, en relation avec les **figures 9A et 9B,** le traitement d'une commande avec un procédé de séquencement de charges selon l'invention, dans une troisième implémentation avec utilisation de numéros d'ordre de destination de substitution. Les figures 9A et 9B illustrent respectivement les deux états suivants de ce traitement : charges avant collecte sur le collecteur et charges après collecte sur le collecteur).

On se place dans le cas (variante évoquée plus haut) où le procédé de séquencement de charges de la figure 3 comprend une étape préalable 30 (avant l'étape 31 de construction de la liste de collecte). Dans cette étape préalable 30, le système de pilotage calcule des numéros d'ordre de destination de substitution en fonction des numéros d'ordre de destination des charges contenues dans les dispositifs tampons sources F1 à F5. Plus précisément, pour au moins un (ou chaque dans un mode de réalisation particulier) groupe de R charges successives contenues dans un des dispositifs tampons sources, avec R un entier supérieur ou égal à 2 : calcul d'un numéro d'ordre de destination de substitution en fonction des numéros d'ordre de destination des R charges. Puis, lors de l'exécution de l'étape 31 de construction de la liste de collecte, le système de pilotage utilise le numéro d'ordre de destination de substitution pour chacune des R charges.

Dans un mode de réalisation particulier, le calcul effectué à l'étape 30 comprend, pour chaque groupe de R charges :

- calcul d'une valeur moyenne des numéros d'ordre de destination des R charges ;
- calcul d'une valeur de désordre des R charges, en fonction des numéros d'ordre de destination des R charges (des exemples de fonctions de calcul de désordre ont déjà été décrits plus haut) ;
- si la valeur de désordre des R charges est supérieure à un seuil prédéterminé S, le numéro d'ordre de destination de substitution est un arrondi de la valeur moyenne vers l'entier supérieur, sinon le numéro d'ordre de destination de substitution est un arrondi de la valeur moyenne vers l'entier inférieur.

Le seuil prédéterminé est par exemple : S=0. On prend dans ce cas l'arrondi de la valeur moyenne vers l'entier inférieur seulement si pas de désordre dans les R charges. Dans une variante, S est supérieur à zéro (par exemple, S=4). On accepte dans ce cas une tolérance en prenant l'arrondi de la valeur moyenne vers l'entier inférieur tant que le désordre dans les R charges est inférieur à S.

Dans l'exemple illustré sur la figure 9A, on suppose que, comme dans l'exemple de la figure 8A, il y a trois sources S1, S2 et S3 (et donc trois dispositifs tampons sources F1, F2 et F3), quatre destinations D1, D2, D3 et D4, et quatre commandes à traiter (une pour chacune des destinations). On ajoute la contrainte suivante : les charges des dispositifs tampons sources doivent être collectées R par R sur le collecteur 1 (avec R=2 dans cet exemple).

Dans l'exemple de la figure 9A, on a les groupes suivants (délimités par des pointillés) : pour le dispositif tampon source F1, (3r,1o) et (2c,4t) (la charge 1r étant seule, elle n'est pas prise en compte) ; pour le dispositif tampon source F2, (2o,1t), (4r,3c) et (3t,4c) ; pour le dispositif tampon source F3, (1c,2r) et (4o,2t) (la charge 3o étant seule, elle n'est pas prise en compte). Dans cet exemple, les charges 1r et 3o ne font pas partie d'un groupe de charges, donc pour elles il n'y a pas de calcul d'un numéro d'ordre de destination de substitution. Elles ne sont pas prises en compte dans l'étape 31 de construction de la liste de collecte (en d'autres termes, elles ne font pas partie des n charges à collecter). Elles seront prises en compte quand le système de pilotage 90 lancera une nouvelle exécution des étapes du procédé en cas de modification de l'ensemble des n charges à collecter (c'est-à-dire en cas de réponse positive à l'étape de test 34). Dans une variante, ou bien en cas d'absence de modification de l'ensemble des n charges à collecter, les charges 1r et 3o (avec leur numéro d'ordre de destination) sont immédiatement prises en compte dans l'étape 31 de construction de la liste de collecte.

Pour chacun de ces groupes, le résultat du calcul de l'étape 30 (en prenant S=0) est indiqué entre parenthèses à droite de chaque charge du groupe. Considérons deux exemples avec des arrondis différents :

- pour le groupe (2o,1t) du dispositif tampon source F2 : le numéro d'ordre de destination de substitution est 2 (moyenne de 2 et 1 = 1,5 ; arrondi vers l'entier supérieur car il y a un désordre dans les deux charges) ;
- pour le groupe (1c,2r) du dispositif tampon source F3 : le numéro d'ordre de destination de substitution est 1 (moyenne de 1 et 2 = 1,5 ; arrondi vers l'entier inférieur car il n'y a pas de désordre dans les deux charges).

La figure 9B illustre la liste de collecte obtenue en appliquant l'algorithme de la figure 5 avec les numéros d'ordre de destination de substitution (sauf pour les charges 1r et 3o qui sont prises en compte avec leur numéro d'ordre de destination) : $L_C$=(1c, 2r, 2o, 1t, 3r, 1o, 2c, 4t, 1r, 4o, 2t, 3o, 4r, 3c, 3t, 4c).

La **figure 10** illustre un algorithme d'une deuxième mise en oeuvre particulière de l'étape 31 de la figure 3 (construction de la liste de collecte $L_C$).

Dans une étape 1001, le système de pilotage construit au moins un ensemble G' comprenant k' dispositifs tampons sources, avec k'≥2 et k'<k. Dans une implémentation particulière permettant d'améliorer (réduire) les temps de calcul, k=2. D'autres valeurs de k sont cependant possibles tout en restant dans le cadre de la présente invention.

Dans une étape 1002, pour le ou chaque ensemble G', le système de pilotage construit une liste de collecte $L_C$' contenant n' charges à collecter et réduisant un désordre des n' charges calculé avec la fonction de calcul de désordre par rapport à un ordre croissant des numéros d'ordre de destination, les n' charges étant contenues dans les k' dispositifs tampons sources, $n' = \sum_{i=1}^{i=k'} p(i)$, avec p(i) un nombre de charges à collecter dans le i^{ème} des k' dispositifs tampons sources.

Dans une étape 1003, le système de pilotage modifie l'ensemble G en remplaçant, pour le ou chaque ensemble G', les k' dispositifs tampons sources par un dispositif tampon source fictif contenant les n' charges dans l'ordre de la liste de collecte $L_C$'.

Dans une étape de test 1004, le système de pilotage vérifie si l'ensemble G modifié comprend un seul dispositif tampon source.

En cas de réponse positive à l'étape de test 1004, le système de pilotage passe à l'étape 1005 dans laquelle il prend comme liste de collecte $L_C$ la liste de collecte $L_C$' de l'unique dispositif tampon source de l'ensemble G modifié.

En cas de réponse négative à l'étape de test 1004, le système de pilotage passe à l'étape 1006, dans laquelle il remplace l'ensemble G par l'ensemble G modifié, puis il réitère les étapes 1001 à 1004 avec le nouvel ensemble G résultant de ce remplacement.

La **figure 11A** présente un premier exemple d'application de la deuxième mise en oeuvre de la figure 10, avec un ensemble G de quatre dispositifs tampons sources F1 à F4 (G={F1, F2, F3, F4}) et k'=2. Dans ce premier exemple, le système de pilotage construit un seul ensemble G' de k' dispositifs tampons sources à chaque itération de l'étape 1001.

Dans une première itération (notée 1101) des étapes 1001 à 1003, le système de pilotage construit un ensemble G'={F1, F2}, construit la liste de collecte associée $L_C$'(F1+F2), et modifie l'ensemble G en remplaçant les deux dispositifs tampons sources F1 et F2 par un dispositif tampon source fictif (noté « F1+F2 ») contenant les n' charges dans l'ordre de la liste de collecte $L_C$'(F1+F2).

Dans une deuxième itération (notée 1102) des étapes 1001 à 1003, le système de pilotage construit un ensemble G'={(F1+F2), F3}, construit la liste de collecte associée $L_C$'(F1+F2+F3), et modifie l'ensemble G en remplaçant les deux dispositifs tampons sources (F1+F2) et F3 par un dispositif tampon source fictif (noté « F1+F2+F3 ») contenant les n' charges dans l'ordre de la liste de collecte $L_C$'(F1+F2+F3).

Dans une troisième itération (notée 1103) des étapes 1001 à 1003, le système de pilotage construit un ensemble G'={(F1+F2+F3), F4}, construit la liste de collecte associée $L_C$'(F1+F2+F3+F4), et modifie l'ensemble G en remplaçant les deux dispositifs tampons sources (F1+F2+F3) et F4 par un dispositif tampon source fictif (noté « F1+F2+F3+F4 ») contenant les n' charges dans l'ordre de la liste de collecte $L_C$' (F1+F2+F3+F4).

A ce stade (étape notée 1104), puisque l'ensemble G ne contient plus que ce dispositif tampon source fictif F1+F2+F3+F4, le système de pilotage prend comme liste de collecte $L_C$ la liste de collecte $L_C$'(F1+F2+F3+F4).

La **figure 11B** présente un deuxième exemple d'application de la deuxième mise en oeuvre de la figure 10, avec un ensemble G de quatre dispositifs tampons sources F1 à F4 (G={F1, F2, F3, F4}) et k'=2.

Dans une première itération (notée 1101') des étapes 1001 à 1003, le système de pilotage :

- construit un premier ensemble $G'_1$={F1, F2} et construit la liste de collecte associée $L_C$'(F1+F2) (sous-étape notée 1101'a) ;
- construit un deuxième ensemble $G'_2$={F3, F4} et construit la liste de collecte associée $L_C$'(F3+F4) (sous-étape notée 1101'b) ; et
- modifie l'ensemble G en remplaçant d'une part les deux dispositifs tampons sources F1 et F2 par un dispositif tampon source fictif (noté « F1+F2 ») contenant les n' charges dans l'ordre de la liste de collecte $L_C$'(F1+F2), et d'autre part les deux dispositifs tampons sources F3 et F4 par un dispositif tampon source fictif (noté « F3+F4 ») contenant les n' charges dans l'ordre de la liste de collecte $L_C$'(F3+F4) (sous-étape notée 1101'c).

Dans une deuxième itération (notée 1102') des étapes 1001 à 1003, le système de pilotage construit un ensemble G'={(F1+F2, F3+F4}, construit la liste de collecte associée $L_C$'(F1+F2+F3+F4), et modifie l'ensemble G en remplaçant les deux dispositifs tampons sources (F1+F2) et (F3+F4) par un dispositif tampon source fictif (noté « F1+F2+F3+F4 ») contenant les n' charges dans l'ordre de la liste de collecte $L_C$'(F1+F2+F3+F4).

A ce stade (étape notée 1103'), puisque l'ensemble G ne contient plus que ce dispositif tampon source fictif F1+F2+F3+F4, le système de pilotage prend comme liste de collecte $L_C$ la liste de collecte $L_C$'(F1+F2+F3+F4).

La **figure 12** illustre un algorithme d'une réalisation particulière, au sein de l'étape 1002 de la figure 10, de la construction d'une liste de collecte $L_C$' pour un ensemble G' de k' dispositifs tampons sources. En résumé, il s'agit d'une transposition de l'algorithme de la figure 5, en remplaçant : n par n', k par k' et $L_C$ par $L_C$'.

Dans une étape 1201, le système de pilotage initialise un premier ensemble d'états E1' avec un unique état $e'_{init}$=($U'_{init}$, $L'_{init}$), où $U'_{init}$ est un k'-uplet contenant k' zéros et $L'_{int}$ est une liste vide.

Dans une étape 1202, le système de pilotage initialise un deuxième ensemble d'états E2' avec une valeur vide.

Dans une étape de test 1203, le système de pilotage vérifie si n' étapes de construction successives (c'est-à-dire toutes) ont été effectuées.

En cas de réponse positive à l'étape de test 1203, le système de pilotage passe à l'étape 1216 dans laquelle il obtient la liste de collecte $L'_C$ à partir d'un unique état final $e'_F$=($U'_F$,$L'_F$) contenu dans E2'. En effet, il prend $L'_F$ comme liste de collecte $L'_C$.

En cas de réponse négative à l'étape de test 1203, le système de pilotage commence le traitement de l'étape de construction suivante en passant à l'étape de test 1204 dans laquelle il vérifie si tous les états de E1' ont été traités. Chaque état e' de E1' s'écrit e'=(U', L'), où U' est un k'-uplet contenant k' éléments, U=($z_1$, ..., $z_{k'}$) avec $z_i$ un nombre

de charges prises dans le $i^{\text{ème}}$ dispositif tampon source, $i \in \{1, ..., k\}$, et L' est une liste de charges associée à U'.

En cas de réponse positive à l'étape de test 1204, le système de pilotage passe à l'étape 1215 dans laquelle, si l'étape de construction n'est pas la $n^{\text{ème}}$ étape de construction, E2' devient le nouvel ensemble E1', puis le système de pilotage revient à l'étape 1203 (pour le passage à l'étape de construction suivante).

En cas de réponse négative à l'étape de test 1204, le système de pilotage prend un état de E1' non traité et passe à l'étape de test 1205 dans laquelle il vérifie si toutes les valeurs de f ont été traitées, avec $f \in \{1, ..., k\}$.

En cas de réponse positive à l'étape de test 1205, le système de pilotage revient à l'étape 1204. En cas de réponse négative à l'étape de test 1205, le système de pilotage prend une valeur de f non traitée et passe à l'étape de test 1206 dans laquelle il vérifie si U'(f)<p(f), avec U'(f) un nombre de charges du $f^{\text{ème}}$ dispositif tampon source contenues dans L', et p(f) le nombre de charges à collecter dans le $f^{\text{ème}}$ dispositif tampon source.

En cas de réponse négative à l'étape de test 1206, le système de pilotage revient à l'étape 1205. En cas de réponse positive à l'étape de test 1206, le système de pilotage passe à l'étape de test 1206bis dans laquelle il vérifie si N'(f)<$y_f$, avec N'(f) un nombre maximal de charges du $f^{\text{ème}}$ dispositif tampon source placées consécutivement dans L', et $y_f$ une valeur prédéterminée (par exemple, $y_f$=6).

En cas de réponse négative à l'étape de test 1206bis, le système de pilotage revient à l'étape 1205. En cas de réponse positive à l'étape de test 1206bis, le système de pilotage passe à l'étape 1207 dans laquelle il crée un nouvel état e'$_N$=(U'$_N$,L'$_N$) en partant de e'=(U', L'), en ajoutant 1 à U'(f) et en ajoutant à la fin de L' la charge occupant la (U'(f)+1)$^{\text{ème}}$ position dans la séquence de charges contenues dans le $f^{\text{ème}}$ dispositif tampon source.

L'étape 1207 est suivie de l'étape 1208 dans laquelle le système de pilotage calcule une valeur de désordre d' de la liste L'$_N$ du nouvel état e'$_N$, avec une fonction de calcul de désordre (voir la description de la figure 5 pour des exemples d'une telle fonction) par rapport à un ordre croissant des numéros d'ordre de destination.

L'étape 1208 est suivie de l'étape de test 1209 dans laquelle le système de pilotage vérifie si d'>d'$_H$, avec d'$_H$ une valeur prédéterminée.

Dans un mode de réalisation particulier de l'étape 1209, la valeur prédéterminée d'$_H$ est calculée comme suit :

- construction d'une liste de référence L'$_H$ contenant les n' charges et construite comme suit :

  o la première charge de L'$_H$ est la charge ayant le plus petit numéro d'ordre de destination parmi les charges réellement prêtes à sortir des k' dispositifs tampons sources ;
  o chaque charge suivante de L'$_H$ est la charge ayant le plus petit numéro d'ordre de destination parmi les charges qui seraient prêtes à sortir des k' dispositifs tampons sources en supposant fictivement que les charges précédentes de L'$_H$ sont sorties des k' dispositifs tampons sources ;

- calcul de d'$_H$, en tant que valeur de désordre de la liste L'$_H$, avec la fonction de calcul de désordre.

En cas de réponse positive à l'étape de test 1209, le système de pilotage revient à l'étape 1205. En cas de réponse négative à l'étape de test 1209, le système de pilotage passe à l'étape de test 1210 dans laquelle il vérifie si E2' contient un autre nouvel état e'$_{Nbis}$=(U'$_{Nbis}$,L'$_{Nbis}$), avec U'$_{Nbis}$= U'$_N$ et d'$_{bis}$ une valeur de désordre de la liste L'$_{Nbis}$.

En cas de réponse positive à l'étape de test 1210, le système de pilotage passe à l'étape 1212 dans laquelle il vérifie si d'<d'$_{bis}$. En cas de réponse positive à l'étape de test 1212, le système de pilotage passe à l'étape 1214 dans laquelle il remplace e'$_{Nbis}$ par e'$_N$ dans E2'. En cas de réponse négative à l'étape de test 1212, le système de pilotage passe à l'étape 1213 dans laquelle il n'insère pas e'$_N$ dans E2'. A l'issue de l'étape 1213 ou de l'étape 1214, le système de pilotage revient à l'étape 1205.

En cas de réponse négative à l'étape de test 1210, le système de pilotage passe à l'étape 1211 dans laquelle il insère e'$_N$ dans E2', puis il revient à l'étape 1205.

La **figure 13** illustre un algorithme d'une troisième mise en oeuvre particulière de l'étape 31 de la figure 3 (construction de la liste de collecte L$_C$). Elle consiste à exécuter plusieurs fois l'étape de construction (31) d'une liste de collecte L$_C$ selon la deuxième mise en oeuvre particulière (décrite plus haut en relation avec les figures 10 à 12), avec au moins un ensemble G' différent d'une exécution à l'autre. Chaque exécution par le système de pilotage (étapes 1301$_1$ à 1301$_m$, avec m>1) fournit un résultat différent, c'est-à-dire une liste de collecte différente (L$_{C1}$, ... L$_{C,m}$). Puis le système de pilotage sélectionne un des résultats, constituant le résultat final (noté L$_C$). Dans une implémentation particulière, le système de pilotage sélectionne (étape 1302) la liste de collecte présentant le plus faible désordre (calculé avec la fonction de calcul de désordre déjà décrite plus haut).

Plusieurs manières d'appliquer cette troisième mise en oeuvre particulière de construction de la liste de collecte L$_C$ sont envisageables.

Une première manière consiste à calculer toutes les combinaisons possibles d'ensembles G', et à comparer les résultats obtenus. La **figure 14** illustre un exemple en ce sens, avec test et comparaison de toutes les combinaisons possibles d'ensembles G' de k'=2 dispositifs tampons sources (chacun étant réel ou fictif), dans le cas d'un ensemble G de départ contenant quatre dispositifs tampons sources F1 à F4. On a représenté sur la figure 14 un arbre entier des possibilités (il y a douze possibilités notées 1401 à 1412).

Une autre manière consiste à appliquer une technique de recherche opérationnelle (« branch and cut », « recuit simulé », « algorithme génétique », etc.), ce qui permet d'éviter une évaluation de l'arbre entier des possibilités et donc d'approcher ou atteindre la meilleure solution dans un délai plus court. Il existe diverses techniques de recherche opérationnelle qui permettent toutes, appliquées dans le présent contexte, l'évaluation de plusieurs combinaisons possibles d'ensembles G' et la sélection de la meilleure. Par exemple :

- la technique « Branch and cut » : des branches de l'arbre entier des possibilités sont jugées « pas intéressantes » et ne sont pas (en partie ou en totalité) visitées ;
- la technique « recuit simulé » : à partir d'une combinaison initiale, on essaie un seul changement, si ce changement améliore la solution, on le fait, sinon on accepte de ne le faire qu'avec un certain pourcentage (évolutif au cours des itérations) ;
- la technique « algorithme génétique » : on considère une population de combinaisons possibles et on applique un changement sur une partie ou la totalité de celle-ci, puis on itère ;
- etc.

Nous pouvons représenter une combinaison d'ensembles G' avec des identifiants et des séparateurs. Exemple : « F1 ; F2 F3 ; F4 F5 F6 ; F7 F8 » représente huit dispositifs tampons sources F1 à F8 qui sont couplés comme suit :

- F2 et F3 ensemble, pour former un dispositif tampon source fictif noté F2+F3 ;
- F4, F5 et F6 ensemble, pour former un dispositif tampon source fictif noté F4+FS+F6 ;
- F7 et F8 ensemble, pour former un dispositif tampon source fictif noté F7+F8 ;
- F1 avec F2+F3, pour former un dispositif tampon source fictif noté F1+F2+F3 ;
- F1+F2+F3 avec F4+F5+F6, pour former un dispositif tampon source fictif noté F1+F2+F3+F4+F5+F6 ; et
- F1+F2+F3+F4+F5+F6 avec F7+F8, pour former un unique dispositif tampon source fictif noté F1+F2+F3+F4+F5+F6+F7+F8, et dont la liste de collecte associée est la liste de collecte $L_C$.

## Revendications

1. Procédé d'optimisation de la distribution de produits, ou charges, devant être acheminées à un opérateur à un poste de préparation de commande ou d'expédition, selon un ordre prédéfini dans une commande listant des charges à acheminer, un numéro d'ordre étant affecté à chacune des charges de ladite commande pour que l'opérateur prépare un colis selon ledit ordre prédéfini, lesdites charges étant stockées dans des contenants de stockage eux-mêmes stockés dans un magasin de stockage, un ensemble de convoyeurs amenant lesdits contenants du magasin de stockage au poste de préparation de commande ou d'expédition, ledit procédé étant mis en oeuvre par un module de pilotage (90) compris dans un système automatisé de distribution de charges, ledit système comprenant en outre le magasin de stockage, le poste de préparation de commande ou d'expédition, ledit ensemble de convoyeurs, un collecteur (1) et un ensemble G de k dispositifs tampons sources (F1-F5) de type « premier entré premier sorti » recevant chacun des charges provenant d'une parmi k sources, avec k≥2,

   ledit procédé comprenant les étapes suivantes :

   - réception d'une commande listant n charges à acheminer selon l'ordre prédéfini en vue de préparer un colis ;
   - génération d'une liste de collecte de charges en fonction de la commande reçue, indiquant pour chaque dispositif tampon source i un nombre p(i) de charges à collecter dans le dispositif tampon source i,

   $$n = \sum_{i=1}^{i=k} p(i)$$ ,

   - pilotage des dispositifs tampons sources et du collecteur pour collecter les charges sortant des k dispositifs tampons sources pour les transporter vers une destination donnée (D1-D5), le collecteur comprenant k noeuds successifs (N1-N5) configurés chacun pour collecter les charges sortant d'un des k dispositifs tampons sources ; et

   **caractérisé en ce que** ledit module de pilotage génère (31) la liste de collecte $L_C$, en imposant aux dispositifs tampons sources et au collecteur une contrainte faible, c'est-à-dire pouvant être violée, de respect d'un ordre croissant des numéros d'ordre de destination pour la collecte des charges sortant des dispositifs tampons sources, et met en oeuvre une réduction du désordre induit par cette contrainte faible, de façon à éviter une accumulation de charges dans au moins un des dispositifs tampons sources et optimiser l'utilisation de toute la capacité mécanique du collecteur, sans contrainte forte imposant, lors de la collecte des charges sur le collecteur, un respect de l'ordre croissant des numéros d'ordre de destination des charges, en effectuant les étapes suivantes :

(A) construction (1001) d'au moins un ensemble G' comprenant k' dispositifs tampons sources, avec k'≥2 et k'<k ;

(B) pour le ou chaque ensemble G', génération (1002) d'une liste de collecte $L_C'$ contenant n' charges à collecter et réduisant un désordre desdites n' charges calculé avec ladite fonction de calcul de désordre par rapport à un ordre croissant des numéros d'ordre de destination, lesdites n' charges étant contenues dans les k' dispositifs tampons sources, $n' = \sum_{i=1}^{i=k'} p(i)$ , avec p(i) un nombre de charges à collecter dans le $i^{ème}$ des k' dispositifs tampons sources ;

(C) modification (1003) de l'ensemble G en remplaçant, pour le ou chaque ensemble G', les k' dispositifs tampons sources par un dispositif tampon source fictif contenant les n' charges dans l'ordre de ladite liste de collecte $L_C'$ ;

(D) si l'ensemble G modifié comprend plusieurs dispositifs tampons sources (1004), réitérations des étapes (A) à (D) avec l'ensemble G modifié (1006) ; si l'ensemble G modifié comprend un seul dispositif tampon source (1004), ladite liste de collecte $L_C'$ forme ladite liste de collecte $L_C$ (1005) ;

**et en ce que**, dans l'étape (B), la génération, pour le ou chaque ensemble G', d'une liste de collecte $L_C'$ comprend les étapes suivantes :

(a) initialisation (1201) d'un premier ensemble d'états E1' avec un unique état initial $e'_{init}=(U'_{init}, L'_{init})$, où $U'_{init}$ est un k'-uplet contenant k' zéros et $L'_{init}$ est une liste vide ;

(b) initialisation (1202) d'un deuxième ensemble d'états E2' avec une valeur vide ;

(c) pour chaque étape de construction (1203) parmi n' étapes de construction successives :

(c.1) pour chaque état e' du premier ensemble d'états E1' (1204), avec l'état $e'=(U', L')$, où U' est un k'-uplet contenant k' éléments, $U'=(z_1, ..., z_{k'})$, avec $z_i$ un nombre de charges prises dans le $i^{ème}$ des k' dispositifs tampons sources, $i \in \{1, ..., k'\}$, et L' est une liste de charges associée à U' :

(c.1.1) pour chaque valeur de $f \in \{1, ..., k'\}$ (1205) :

(c.1.1.1) si U'(f)<p(f), avec U'(f) un nombre de charges du $f^{ème}$ dispositif tampon source contenues dans L', et p(f) le nombre de charges à collecter dans le $f^{ème}$ dispositif tampon source (1206) :

- i- création (1207) d'un nouvel état $e'_N=(U'_N,L'_N)$ en partant de l'état $e'=(U', L')$, en ajoutant 1 à U'(f) et en ajoutant à la fin de la liste L' la charge occupant la $(U'(f)+1)^{ème}$ position dans la séquence de charges contenues dans le $f^{ème}$ dispositif tampon source ;

- ii- calcul (1208) d'une valeur de désordre d' de la liste $L'_N$ du nouvel état $e'_N$, avec ladite fonction de calcul de désordre par rapport à un ordre croissant des numéros d'ordre de destination ;

- iii- si le deuxième ensemble d'états E2' contient un autre nouvel état $e'_{Nbis}=(U'_{Nbis},L'_{Nbis})$, avec $U'_{Nbis}= U'_N$ et $d'_{bis}$ une valeur de désordre de la liste $L'_{Nbis}$ (1210) : si $d'<d'_{bis}$, le nouvel état $e'_N$ remplace l'autre nouvel état $e'_{Nnis}$ dans le deuxième ensemble d'états E2' (1214), et si $d'≥d_{bis}'$, le nouvel état $e'_N$ n'est pas inséré dans le deuxième ensemble d'états E2' (1213) ;

- iv- si le deuxième ensemble d'états E2' ne contient pas ledit autre nouvel état $e'_{Nbis}$, le nouvel état $e'_N$ est inséré dans le deuxième ensemble d'états E2' (1211) ;

(c.2) si l'étape de construction n'est pas la $n^{ème}$ étape de construction : le deuxième ensemble d'états E2' devient le nouvel ensemble E1' (1215) et passage à l'étape de construction suivante ;

(c.3) si l'étape de construction est la $n^{ème}$ étape de construction : le deuxième ensemble d'états E2' contient un unique état final $e'_F=(U'_F,L'_F)$ et la liste $L'_F$ forme ladite liste de collecte $L_C'$ (1216).

2. Procédé selon la revendication 1, dans lequel : k'=2.

3. Procédé selon l'une quelconque des revendications 1 et 2, comprenant :

- au moins deux exécutions (1301a, 1301b) de l'étape de génération (31) d'une liste de collecte $L_C$, avec au moins un ensemble G' différent d'une exécution à l'autre, chaque exécution fournissant un résultat ; et
- sélection (1302) d'un des résultats.

4.  Procédé selon la revendication 3, dans lequel lesdites au moins deux exécutions et ladite sélection sont effectuées en appliquant une technique de recherche opérationnelle.

5.  Procédé selon la revendication 1, dans lequel, à l'étape (c.1.1.1), le module de pilotage vérifie également (506bis, 1206bis) si $N(f) < y_f$, avec $N(f)$ la plus longue séquence de charges du $f^{ème}$ dispositif tampon source placées consécutivement dans L', et $y_f$ un seuil prédéterminé,
    et dans lequel les étapes (i) à (iv) sont effectuées seulement d'une part si $U'(f) < p(f)$ et d'autre part si $N(f) < y_f$.

6.  Procédé selon l'une quelconque des revendications 1 et 5, dans lequel l'étape -ii- est suivie de l'étape suivante :

    - ii-bis- si $d' > d'_H$ (1209), avec $d'_H$ une valeur prédéterminée, le nouvel état $e'_N$ n'est pas inséré dans le deuxième ensemble d'états E2' et les étapes (iii) et (iv) ne sont pas effectuées.

7.  Procédé selon la revendication 6, dans lequel la valeur prédéterminée $d'_H$ est calculée comme suit :

    - construction d'une liste de référence $L'_H$, contenant lesdites n' charges et construite comme suit :

        * la première charge de $L'_H$ est la charge ayant le plus petit numéro d'ordre de destination parmi les charges réellement prêtes à sortir des k' dispositifs tampons sources ;
        * chaque charge suivante de $L'_H$ est la charge ayant le plus petit numéro d'ordre de destination parmi les charges qui seraient prêtes à sortir des k' dispositifs tampons sources en supposant fictivement que les charges précédentes de $L'_H$ sont sorties des k' dispositifs tampons sources ;

    - calcul de $d'_H$, en tant que valeur de désordre de la liste $L'_H$, avec ladite fonction de calcul de désordre.

8.  Procédé selon l'une quelconque des revendications 1 à 7, dans lequel ladite fonction de calcul de désordre, pour une liste M de q charges, s'écrit :

$$H(M) = \sum_{i=1}^{i=q}[(i-1) - K(i)]$$

, avec $K(i)$ le nombre de charges de la liste M placées avant la $i^{ème}$ charge de la liste M et ayant un numéro d'ordre de destination inférieur ou égal au numéro d'ordre de la $i^{ème}$ charge de la liste M.

9.  Procédé selon l'une quelconque des revendications 1 à 8, dans lequel les charges d'une commande donnée doivent parvenir à une destination donnée dans un ordre de destination donné croissant, et dans lequel ledit module de pilotage effectue une étape de commande (33) d'au moins un dispositif de séquencement (91), placé entre le collecteur et ladite au moins une destination, pour une correction du désordre des n charges.

10. Procédé selon l'une quelconque des revendications 1 à 9, dans lequel le module de pilotage effectue l'étape suivante, avant l'étape (31) de génération de la liste de collecte, pour au moins un groupe de R charges successives contenues dans un des dispositifs tampons sources, avec R un entier supérieur ou égal à 2 :

    - calcul (30) d'un numéro d'ordre de destination de substitution en fonction des numéros d'ordre de destination des R charges ; et

    et en ce que pour l'exécution de l'étape (31) de génération de la liste de collecte, le module de pilotage utilise le numéro d'ordre de destination de substitution pour chacune des R charges.

11. Procédé selon la revendication 10, dans lequel le calcul d'un numéro d'ordre de destination de substitution en fonction des numéros d'ordre de destination des R charges comprend :

    - calcul d'une valeur moyenne des numéros d'ordre de destination des R charges ;
    - calcul d'une valeur de désordre des R charges, en fonction des numéros d'ordre de destination des R charges ;
    - si la valeur de désordre des R charges est supérieure à un seuil prédéterminé, le numéro d'ordre de destination de substitution est un arrondi de la valeur moyenne vers l'entier supérieur, sinon le numéro d'ordre de destination de substitution est un arrondi de la valeur moyenne vers l'entier inférieur.

12. Procédé selon l'une quelconque des revendications 1 à 11, dans lequel une nouvelle exécution des étapes du procédé est lancée si une entrée d'au moins une nouvelle charge dans un des dispositifs tampons sources provoque une modification (34) des charges à collecter dans ledit dispositif tampon source, et donc des n charges à collecter dans l'ensemble des k dispositifs tampons sources.

13. Produit programme d'ordinateur (930), comprenant des instructions de code de programme pour la mise en oeuvre du procédé selon au moins une des revendications 1 à 12, lorsque ledit programme est exécuté sur un ordinateur.

14. Médium de stockage (93) lisible par ordinateur et non transitoire, stockant un produit programme d'ordinateur (930) selon la revendication 13.

15. Système automatisé de distribution de charges comprenant :

- k sources (S1-S5), avec k≥2 ;
- au moins une destination (D1-D5) ;
- un ensemble G de k dispositifs tampons sources (F1-F5), de type « premier entré premier sorti », recevant chacun des charges provenant d'une des k sources ;
- un collecteur (1) collectant les charges sortant des k dispositifs tampons sources et les transportant vers ladite au moins une destination, le collecteur comprenant k noeuds successifs (N1-N5) configurés chacun pour collecter les charges sortant d'un des k dispositifs tampons sources ; et
- un module de pilotage (90) configuré pour traiter des commandes, chaque commande listant des charges pour une destination donnée et associées chacune à un numéro d'ordre de destination ; ledit module de pilotage (90) étant également configuré pour commander le collecteur (1) et l'ensemble G de k dispositifs tampons sources (F1-F5) pour une collecte de charges sur le collecteur conforme à une liste de collecte $L_C$ contenant n charges, lesdites n charges étant contenues dans les dispositifs tampons sources, $n = \sum_{i=1}^{i=k} p(i)$, avec p(i) un nombre de charges à collecter dans le $i^{ème}$ dispositif tampon source ;

**caractérisé en ce que** ledit module de pilotage comprend une machine de calcul (91, 92, 93) configurée pour générer la liste de collecte, le système automatisé de distribution étant configuré pour mettre en oeuvre le procédé selon l'une des revendications 1 à 13.

**Patentansprüche**

1. Verfahren zum Optimieren der Verteilung von Produkten oder Ladungen, die zu einem Bediener an einer Kommissionierungs- oder Versandstation in einer Reihenfolge, die in einer Bestellung vordefiniert ist, die die zu befördernden Ladungen auflistet, befördert werden müssen, wobei jeder der Ladungen der Bestellung eine laufende Nummer zugeordnet wird, damit der Bediener entsprechend der vordefinierten Reihenfolge ein Versandstück vorbereitet, wobei die Ladungen in Lagerbehältern gelagert werden, die selbst in einem Lager gelagert werden, wobei eine Reihe von Förderern die Behälter vom Lager zur Kommissionierungs- oder Versandstation bringen, wobei das Verfahren von einem Steuermodul (90) umgesetzt wird, das in einem automatisierten Ladungsverteilungssystem enthalten ist, wobei das System ferner das Lager, die Kommissionierungs-oder Versandstation, die Reihe von Förderern, einen Sammler (1) und einen Satz G von k Quellen-Puffervorrichtungen (F1-F5) des Typs "First In, First Out" aufweist, die jeweils Ladungen erhalten, die von einer unter den k Quellen stammen, wobei k ≥ 2 ist,

wobei das Verfahren die folgenden Schritte aufweist:

- Empfangen von einer Bestellung, die *n* Ladungen auflistet, die in einer vordefinierten Reihenfolge zum Vorbereiten eines Versandstücks zu befördern sind,
- Erstellen von einer Ladungssammlungs-Liste in Abhängigkeit von der empfangenen Bestellung, die für jede Quellen-Puffervorrichtung i eine Anzahl p(i) von Ladungen angibt, die in der Quellen-Puffervorrichtung i zu sammeln sind, $n = \sum_{i=1}^{i=k} p(i)$,

- Steuern der Quellen-Puffervorrichtungen und des Sammlers zum Sammeln der Ladungen, die die k Quellen-Puffervorrichtungen verlassen, um sie an einen bestimmten Zielort (D1-D5) zu transportieren, wobei der Sammler k aufeinanderfolgende Knoten (N1-N5) aufweist, die jeweils konfiguriert sind, um die Ladungen zu sammeln, die eine der k Quellen-Puffervorrichtungen verlassen, und

**dadurch gekennzeichnet, dass** das Steuermodul die Sammlungsliste Lc generiert (31), indem den Quellen-Puffervorrichtungen und dem Sammler eine schwache, d.h. übertretbare Einschränkung der Einhaltung einer aufsteigenden Reihenfolge der laufenden Zielort-Nummern für das Sammeln der Ladungen auferlegt, die die Quellen-Puffervorrichtungen verlassen, und eine Reduzierung der Unordnung, die durch dieses schwache Einschränkung hervorgerufen wird, derart umsetzt, um eine Ansammlung von Ladungen in mindestens einer der Quellen-Puffervorrichtungen zu verhindern und die Nutzung der gesamten mechanischen Kapazität des Sammlers ohne starke Einschränkung zu optimieren, die beim Sammeln der Ladungen auf dem Sammler eine Einhaltung der aufsteigenden Reihenfolge der laufenden Zielort-Nummern der Ladungen auferlegt, indem folgende Schritte durchgeführt werden:

(A) Erstellen (1001) von mindestens einem Satz G', der k' Quellen-Puffervorrichtungen aufweist, wobei $k' \geq 2$ and $k' < k$ ,

(B) Erzeugen (1002) für den oder jeden Satz G' einer Sammlungsliste Lc', die n' Ladungen, die zu sammeln sind, enthält und eine Unordnung der n' Ladungen reduziert, die mit der Berechnungsfunktion der Unordnung in Bezug auf eine aufsteigende Reihenfolge der laufenden Zielort-Nummern, wobei die n' Ladungen in den k' Quellen-Puffervorrichtungen enthalten sind, $n' = \sum_{i=1}^{i=k'} p(i)$ , berechnet wird, wobei p(i) eine Anzahl von Ladungen ist, die in der i-ten der k' Quellen-Puffervorrichtungen zu sammeln sind,

(C) Ändern (1003) des Satzes G, indem für den oder jeden Satz G' die k' Quellen-Puffervorrichtungen durch eine fiktive Quellen-Puffervorrichtung ersetzt werden, die die n' Ladungen in der Reihenfolge der Sammlungsliste Lc' enthält,

(D) wenn der geänderte Satz G mehrere Quellen-Puffervorrichtungen (1004) aufweist, Wiederholungen der Schritte (A) bis (D) mit dem geänderten (1006) Satz G, wenn der geänderte Satz G eine einzige Quellen-Puffervorrichtung (1004) aufweist, bildet die Sammlungsliste Lc' die Sammlungsliste Lc (1005),

und dadurch, dass in dem Schritt (B) das Generieren einer Sammlungsliste $L_C$' für den oder jeden Satz G' die folgenden Schritte aufweist:

(a) Initialisieren (1201) eines ersten Satzes von Zuständen E1' mit einem einzigen Anfangszustand $e'_{init}=(U'_{init}, L'_{init})$, wobei $U'_{init}$ ein k'-Tupel ist, das k' Nullen enthält, und $L'_{init}$ eine leere Liste ist,

(b) Initialisieren (1202) eines zweiten Satzes von Zuständen E2' mit einem leeren Wert.

(c) für jeden Schritt des Erstellens (1203) unter n' aufeinanderfolgenden Schritten des Erstellens:

(c.1) für jeden Zustand e' des ersten Satzes von Zuständen E1' (1204) mit dem Zustand $e'=(U', L')$, wobei U' ein k'-Tupel ist, das k' Elemente enthält, $U'=(z_1, ... , z_{k'})$, wobei $z_i$ eine Anzahl von Ladungen ist, die in der i-ten der k' Quellen-Puffervorrichtungen genommen wird, $i \in \{1, ... , k\}$ und L' eine Liste von Ladungen ist, die U' zugeordnet wird:

(c.1.1) für jeden Wert von $f \in \{1, ... , k\}$ (1205):

(c.1.1.1) wenn U'(f)<p(f), wobei U'(f) eine Anzahl von Ladungen der f-ten Quellen-Puffervorrichtungen ist, die in L' enthalten sind, und p(f) die Anzahl von Ladungen ist, die in der f-ten Quellen-Puffervorrichtung zu sammeln sind (1206):

- i- Schaffen (1207) eines neuen Zustands $e'_N=(U'_N,L'_N)$ ausgehend von dem Zustand $e'=(U', L')$, indem 1 zu U'(f) hinzugefügt wird und indem am Ende der Liste L' die Ladung hinzugefügt wird, die die (U'(f)+ 1)-te Position in der Reihenfolge der Ladungen einnimmt, die in der f-ten Quellen-Puffervorrichtung enthalten sind,

- ii- Berechnen (1208) eines Unordnungswertes d' der Liste $L'_N$ des neuen Zustands $e'_N$ mit der Berechnungsfunktion der Unordnung in Bezug auf eine aufsteigende Reihenfolge der laufenden Zielort-Nummern,

- iii- wenn der zweite Satz von Zuständen E2' einen anderen neuen Zustand $e'_{Nbis}=(U'_{NbiS},L'_{Nbis})$ enthält, wobei $U'_{Nbis}= U'_N$ und $d'_{biS}$ ein Unordnungswert der Liste $L'N_{bis}$ (1210) ist: wenn $d' < d'_{bis}$ ersetzt der neue Zustand $e'_N$ den anderen neuen Zustand $e'_{Nnis}$ in dem zweiten Satz von Zuständen E2' (1214) und wenn $d \geq d_{bis}'$ ist, wird der neue Zustand $e'_N$ nicht in den zweiten Satz von Zuständen E2' (1213) eingefügt,
- iv- wenn der zweite Satz von Zuständen E2' den anderen neuen Zustand $e'_{Nbis}$ nicht enthält, wird der neue Zustand $e'_N$ in den zweiten Satz von Zuständen eingefügt E2' (1211), (c.2) wenn der Schritt des Erstellens nicht der n'-te Schritt des Erstellens ist: wird der zweite Satz von Zuständen E2' der neue Satz E1' (1215) und geht zum nächsten Schritt des Erstellens über,

(c.3) wenn der Schritt des Erstellens der n'-te Schritt des Erstellens ist: enthält der zweite Satz von Zuständen E2' einen einzigen Endzustand $e'_F=(U'_F,L'_F)$ und die Liste $L'_F$ bildet die Sammlungsliste Lc' (1216).

2. Verfahren nach Anspruch 1, wobei: k'=2.

3. Verfahren nach einem der Ansprüche 1 und 2, umfassend:

   - mindestens zwei Ausführungen (1301a, 1301b) des Schrittes des Generierens (31) einer Sammlungsliste Lc mit mindestens einem Satz G', der sich von einer Ausführung zur anderen unterscheidet, wobei jede Ausführung ein Ergebnis liefert, und
   - Auswählen (1302) eines der Ergebnisse.

4. Verfahren nach Anspruch 3, wobei die mindestens zwei Ausführungen und das Auswählen durchgeführt werden, indem eine operative Suchtechnik angewendet wird.

5. Verfahren nach Anspruch 1, wobei das Steuermodul in dem Schritt (c.1.1.1) auch überprüft (506bis, 1206bis), ob N(f)<yt ist, wobei N(f) die längste Reihenfolge von Ladungen der f-ten Quellen-Puffervorrichtung ist, die nacheinander in L' platziert werden, und $Y_f$ ein vorbestimmter Schwellenwert ist,
   und wobei die Schritte (i) bis (iv) einerseits nur ausgeführt werden, wenn U'(f)<p(f) und andererseits, wenn N(f)<yt.

6. Verfahren nach einem der Ansprüche 1 und 5, wobei auf den Schritt -ii- der folgende Schritt folgt:

   - ii-bis-wenn d'>d'$_H$ (1209), wobei d'$_H$ ein vorbestimmter Wert ist, wird der neue Zustand $e'_N$ nicht in den zweiten Satz von Zuständen E2' eingefügt und die Schritte (iii) und (iv) werden nicht ausgeführt.

7. Verfahren nach Anspruch 6, wobei der vorbestimmte Wert d'$_H$ wie folgt bestimmt wird:

   - Erstellen von einer Referenzliste L'$_H$, die n' Ladungen enthält und wie folgt erstellt wird:

     * die erste Ladung von L'$_H$ ist die Ladung, die die kleinste laufende Zielort-Nummer unter den Ladungen aufweist, die tatsächlich bereit sind, aus den k' Quellen-Puffervorrichtungen auszutreten,
     * jede folgende Ladung von L'$_H$ ist die Ladung, die die kleinste laufende Zielort-Nummer unter den Ladungen aufweist, die bereit wären, aus den k' Quellen-Puffervorrichtungen auszutreten, wenn fiktiv angenommen wird, dass die vorhergehenden Ladungen von L'$_H$ aus den k' Quellen-Puffervorrichtungen ausgetreten sind,

   - Berechnen von d'$_H$ als Unordnungswert der Liste L'$_H$ mit der Berechnungsfunktion der Unordnung.

8. Verfahren nach einem der Ansprüche 1 bis 7, wobei die Berechnungsfunktion der Unordnung für eine Liste M von q Ladungen lautet:

$$H(M) = \sum_{i=1}^{i=q}[(i-1) - K(i)]$$ , wobei K(i) die Anzahl der Ladungen der Liste M ist, die vor der i-ten Ladung der Liste M angeordnet sind und eine laufende Zielort-Nummer haben, die kleiner oder gleich der laufenden Nummer der i-ten Ladung der Liste M ist.

9. Verfahren nach einem der Ansprüche 1 bis 8, wobei die Ladungen einer bestimmten Bestellung an einem bestimmten Zielort in einer bestimmten, aufsteigenden Zielort-Reihenfolge ankommen müssen, und wobei das Steuermodul einen Schritt des Steuerns (33) von mindestens einer Taktungsvorrichtung (91), die zwischen dem Sammler und dem mindestens einen Zielort angeordnet ist, für ein Korrigieren der Unordnung der n Ladungen ausführt.

10. Verfahren nach einem der Ansprüche 1 bis 9, wobei das Steuermodul vor dem Schritt (31) des Generierens der Sammlungsliste den folgenden Schritt für mindestens eine Gruppe von R aufeinanderfolgenden Ladungen ausführt, die in einer der Quellen-Puffervorrichtungen enthalten sind, wobei R eine ganze Zahl größer oder gleich 2 ist:

- Berechnen (30) einer laufenden Zielort-Ersatz-Nummer in Abhängigkeit von den laufenden Zielort-Nummern der R Ladungen, und dadurch, dass das Steuermodul zum Ausführen des Schrittes (31) des Generierens der Sammlungsliste die laufende Zielort-Ersatz-Nummer für jede der R Ladungen verwendet.

11. Verfahren nach Anspruch 10, wobei das Berechnen einer laufenden Zielort-Ersatz-Nummer in Abhängigkeit von den laufenden Zielort-Nummern der R Ladungen aufweist:

- Berechnen eines Mittelwertes der laufenden Zielort-Nummern der R Ladungen,
- Berechnen eines Unordnungswertes der R Ladungen in Abhängigkeit von den laufenden Zielort-Nummern der R Ladungen,
- wenn der Unordnungswert der R Ladungen größer als ein vorbestimmter Schwellwert ist, ist die laufende Zielort-Ersatz-Nummer eine Aufrundung des Mittelwertes auf die nächsthöhere ganze Zahl, anderenfalls ist die laufende Zielort-Ersatz-Nummer eine Abrundung des Mittelwertes auf die nächstniedrigere ganze Zahl.

12. Verfahren nach einem der Ansprüche 1 bis 11, wobei eine neue Ausführung der Schritte des Verfahrens gestartet wird, wenn ein Eintreten von mindestens einer neuen Ladung in eine der Quellen-Puffervorrichtungen ein Ändern (34) der Ladungen bewirkt, die in der Quellen-Puffervorrichtung zu sammeln sind, und somit der n Ladungen, die in dem Satz von k Quellen-Puffervorrichtungen zu sammeln sind.

13. Computerprogrammprodukt (930), das Programmcodeanweisungen für das Umsetzen des Verfahrens nach mindestens einem der Ansprüche 1 bis 12 aufweist, wenn das Programm auf einem Computer ausgeführt wird.

14. Computerlesbares und nicht-transitorisches Aufzeichnungsmedium (93), das ein Computerprogrammprodukt (930) nach Anspruch 13 speichert.

15. Automatisches Verteilungssystem von Ladungen, umfassend:

- k Quellen (S1-S5) mit $k \geq 2$,
- mindestens einen Zielort (D1-D5),
- einen Satz G von k Quellen-Puffervorrichtungen (F1-F5) des Typs "First In, First Out", die jeweils Ladungen erhalten, die von einer unter den k Quellen stammen,
- einen Sammler (1), der die Ladungen sammelt, die die k Quellen-Puffervorrichtungen verlassen und sie an den mindestens einen Zielort transportieren, wobei der Sammler k aufeinanderfolgende Knoten (N1-N5) aufweist, die jeweils konfiguriert sind, um die Ladungen zu sammeln, die eine der k Quellen-Puffervorrichtungen verlassen, und
- ein Steuermodul (90), das konfiguriert ist, um Bestellungen zu bearbeiten, wobei jede Bestellung Ladungen für einen bestimmten Zielort auflistet und die jeweils einer laufenden Zielort-Nummer zugeordnet sind, wobei das Steuermodul (90) ebenfalls konfiguriert ist, um den Sammler (1) und den Satz G von k Quellen-Puffervorrichtungen (F1-F5) für ein Sammeln der Ladungen auf dem Sammler gemäß einer Sammlungsliste Lc, die n Ladungen enthält, zu steuern, wobei die n Ladungen in den k Quellen-Puffervorrichtungen enthalten sind,

$$n = \sum_{i=1}^{i=k} p(i)$$ , wobei p(i) eine Anzahl von Ladungen ist, die in der i-ten Quellen-Puffervorrichtung zu sammeln sind,

**dadurch gekennzeichnet, dass** das Steuermodul eine Rechenmaschine (91, 92, 93) aufweist, die konfiguriert ist, um die Sammlungsliste zu generieren, wobei das automatische Verteilungssystem konfiguriert ist, um das Verfahren nach einem der Ansprüche 1 bis 13 umzusetzen.

**Claims**

1. A method for optimising the timing of products, or loads, to be routed to an operator at an order preparation or shipping station, according to a predefined ordering in an order listing the loads to be routed, an ordering number order being assigned to each of the loads of said order so that the operator prepares a package according to said predefined ordering, said loads being stored in storage containers in turn stored in a storage warehouse, a set of conveyors bringing said containers from the storage warehouse to the order preparation or shipping station, said method being implemented by a control module (90) comprised in an automated load timing system, said system further comprising the storage warehouse, the order preparation or shipping, said set of conveyors, a manifold (1) and a set G of k source buffer devices (F1-F5) of the "first in first out" type each receiving loads from one of k sources, with $k \geq 2$,

said method comprising the following steps:

- receiving an order listing n loads to be routed according to the predefined ordering in order to prepare a package;
- generating a load collection list according to the order received, indicating for each source buffer device i a number p(i) of loads to be collected in the source buffer device i, $\;\mathrm{n} = \sum_{i=1}^{i=k} \mathrm{p}(i)$ ,
- controlling the source buffer devices and the manifold to collect the loads leaving the k source buffer devices to transport them to a given destination (D1-D5), the manifold comprising k successive nodes (N1-N5) each configured to collect the loads leaving one of the k source buffer devices; and

**characterised in that** said control module generates (31) the collection list $L_c$, by imposing on the source buffer devices and on the manifold a weak constraint, that is to say one which can be violated, of compliance with an increasing ordering of destination ordering numbers for the collection of the loads leaving the source buffer devices, and implements a reduction of the disorder induced by this weak constraint, so as to avoid an accumulation of loads in at least one of the source buffer devices and to optimise the use of all the mechanical capacity of the manifold, without strong constraint imposing, during the collection of the loads on the manifold, a compliance with the increasing ordering of the destination ordering numbers of the loads, by carrying out the following steps:

(A) constructing (1001) at least one set G' comprising k' source buffer devices, with $k' \geq 2$ and $k' < k$;
(B) for the or each set G', generating (1002) a collection list $L_c'$ containing n' loads to be collected and reducing a disorder of said n' loads calculated with said disorder calculation function with respect to an increasing ordering of the destination ordering numbers, said n' loads being contained in the k' source

buffer devices, $\;\mathrm{n}' = \sum_{i=1}^{i=k'} \mathrm{p}(i)\;$, with p(i) a number of loads to be collected in the $i^{th}$ of the k' source buffer devices;
(C) modifying (1003) the set G by replacing, for the or each set G', the k' source buffer devices by a fictitious source buffer device containing the n' loads in the ordering of said collection list $L_c'$;
(D) if the modified set G comprises several source buffer devices (1004), repeating the steps (A) to (D) with the modified set G (1006); if the modified set G comprises a single source buffer device (1004), said collection list $L_c'$ forms said collection list $L_c$ (1005);

and **in that**, in step (B), the generation, for the or each set G', of a collection list $L_c'$ comprises the following steps:

(a) initialising (1201) a first set of states E1' with a unique initial state $e'_{init}=(U'_{init}, L'_{init})$, where $U'_{init}$ is a k'-tuple containing k' zeros and $L'_{init}$ is an empty list;
(b) initialising (1202) a second set of E2' states with an empty value;
(c) for each construction step (1203) among n' successive construction steps:

(c.1) for each state e' of the first set of states E1' (1204), with the state $e'=(U', L')$, where U' is a k'-tuple containing k' elements, $U'=(z_1, ..., z_{k'})$ with $z_i$ a number of loads taken from the $i^{th}$ of k' source buffer devices, $i \in \{1,..., k'\}$, and L' is a list of loads associated with U':
(c.1.1) for each value of $f \in \{1,..., k'\}$ (1205):
(c. 1.1.1) if U'(f)<p(f), with U'(f) a number of loads of the $f^{th}$ source buffer device contained in L', and p(f) the number of loads to be collected in the $f^{th}$ source buffer device (1206):

- i- creating (1207) a new state $e'_N=(U'_N, L'_N)$ starting from state $e'=(U', L')$, by adding 1 to U'(f) and by adding to the end of the list L' the load occupying the $(U'(f)+1)^{th}$ position in the sequence of loads contained in the $f^{th}$ source buffer device;

- ii- calculating (1208) a disorder value d' of the list $L'_N$ of the new state $e'_N$, with said disorder calculation function with respect to an increasing ordering of the destination ordering numbers;
- iii- if the second set of states E2' contains another new state $e'_{Nbis}=(U'_{Nbis},L'_{Nbis})$, with $U'_{Nbis}=U'_N$ and $d'_{bis}$ a disorder value from the list $L'_{Nbis}$ (1210): if $d'<d'_{bis}$, the new state $e'_N$ replaces the other new state $e'_{Nnis}$ in the second set of states E2' (1214), and if $d'\geq d_{bis}'$ , the new state $e'_N$ is not inserted into the second set of states E2' (1213);
- iv- if the second set of states E2' does not contain said other new state $e'_{Nbis}$, the new state $e'_N$ is inserted into the second set of states E2' (1211);

(c.2) if the construction step is not the $n^{th}$ construction step: the second set of states E2' becomes the new set EI' (1215) and goes to the next construction step;

(c.3) if the construction step is the $n^{th}$ construction step: the second set of states E2' contains a single final state $e'_F=(U'_F,L'_F)$ and the list $L'_F$ forms said collection list $L_c'$ (1216).

2. The method according to claim 1, wherein: k'=2.

3. The method according to any one of claims 1 and 2, comprising:

   - at least two executions (1301a, 1301b) of the step (31) of generating a collection list $L_c$, with at least one set G' different from one execution to another, each execution providing a result; and
   - a selection (1302) of one of the results.

4. The method according to claim 3, wherein said at least two executions and said selection are carried out by applying an operational research technique.

5. The method according to claim 1, wherein, in step (c. 1.1.1), the control module also verifies (506bis, 1206bis) if $N(f)<y_f$, with $N(f)$ the longest sequence of loads of the $f^{th}$ source buffer device placed consecutively in L', and $y_f$ a predetermined threshold,
   and wherein steps (i) to (iv) are performed only on the one hand if $U'(f)<p(f)$ and on the other hand if $N(f)<y_f$.

6. The method according to any one of claims 1 and 5, wherein step -ii- is followed by the following step:

   - ii-bis- if $d'>d'_H$ (1209), with $d'_H$ a predetermined value, the new state $e'_N$ is not inserted into the second set of states E2' and the steps (iii) and (iv) are not carried out.

7. The method according to claim 6, wherein the predetermined value $d'_H$ is calculated as follows:

   - construction of a reference list $L'_H$, containing said n' loads and constructed as follows:

     * the first load of $L'_H$ is the load having the smallest destination ordering number among the loads actually ready to leave the k' source buffer devices;
     * each subsequent load of $L'_H$ is the load with the lowest destination ordering number among the loads that would be ready to leave the k' source buffer devices assuming fictitiously that the previous loads of $L'_H$ have left the k source buffer devices;

   - calculation of $d'_H$, as a disorder value of the list $L'_H$, with said disorder calculation function.

8. The method according to any one of claims 1 to 7, wherein said disorder calculation function, for a list M of q loads, is written:

$$H(M) = \sum_{i=1}^{i=q}[(i-1)-K(i)]$$

, with $K(i)$ the number of loads of the list M placed before the $i^{th}$ load of the list M and having a destination ordering number less than or equal to the ordering number of the $i^{th}$ load of the list M.

9. The method according to any one of claims 1 to 8, wherein the loads of a given order must arrive at a given destination in a given increasing destination ordering, and wherein said control module performs a step (33) of controlling at least one sequencing device (91), placed between the manifold and said at least one destination, for correction of the disorder of the n loads.

10. The method according to any one of claims 1 to 9, wherein the control module performs the following step, before the step (31) of generating the collection list, for at least one group of R successive loads contained in one of the source buffer devices, with R an integer greater than or equal to 2:

- calculation (30) of a substitution destination ordering number according to the destination ordering numbers of the R loads; and

and in that for the execution of the step (31) of generating the collection list, the control module uses the ordering number of the substitution destination for each of the R loads.

11. The method according to claim 10, wherein the calculation of a substitution destination ordering number according to the destination ordering numbers of the R loads comprises:

- calculating an average value of the destination ordering numbers of the R loads;
- calculating a disorder value of the R loads, according to the destination ordering numbers of the R loads;
- if the disorder value of the R loads is greater than a predetermined threshold, the substitution destination ordering number is an average value rounded up, otherwise the substitution destination ordering number is an average value rounded down.

12. The method according to any one of claims 1 to 11, wherein a new execution of the steps of the method is launched if an entry of at least one new load into one of the source buffer devices causes a modification (34) of the loads to be collected in said source buffer device, and therefore n loads to be collected in all the k source buffer devices.

13. A computer program product (930), comprising program code instructions for implementing the method according to at least one of claims 1 to 12, when said program is executed on a computer.

14. A computer-readable, non-transitory storage medium (93) storing a computer program product (930) according to claim 13.

15. Automated load timing system comprising:

- k sources (S1-S5), with $k \geq 2$;
- at least one destination (D1-D5);
- a set G of k source buffer devices (F1-F5), of the "first in first out" type, each receiving loads from one of the k sources;
- a manifold (1) collecting the loads leaving the k source buffer devices and transporting them to said at least one destination, the manifold comprising k successive nodes (N1-N5) each configured to collect the loads leaving one of the k source buffer devices; and
- a control module (90) configured to process orders, each order listing loads for a given destination and each associated with a destination ordering number; said control module (90) being also configured to control the manifold (1) and the set G of k source buffer devices (F1-F5) for a collection of loads on the manifold in accordance with a collection list $L_c$ containing n loads, said n loads being contained in the source buffer devices,

$$n = \sum_{i=1}^{i=k} p(i)$$ , with p(i) a number of loads to be collected in the $i^{th}$ source buffer device;

**characterised in that** said control module comprises a calculation machine (91, 92, 93) configured to generate the collection list, the automated timing system being configured to implement the method according to one of claims 1 to 13.

Figure 1C

Figure 1B

Figure 1A

29

Figure 2

EP 3 693 902 B1

calcul de numéros d'ordre de destination de
substitution — 30

construction d'une liste de collecte — 31

commande du collecteur et des dispositifs
tampons sources pour une collecte
conforme à la liste de collecte — 32

commande du dispositif de séquencement
pour une correction du désordre — 33

modification des n
charges à collecter ? — 34

oui

non

**Figure 3**

90

91

94

95

92    93    930

**Figure 4**

EP 3 693 902 B1

**Figure 5**

Début

Initialisation E1 — 501

Initialisation E2 — 502

503
Toutes étapes de construction effectuées ? — oui

non

515
Si étape courante différente de $n^{ème}$ étape, E2 devient le nouvel E1 ← oui

504
Tous états de E1 traités ?

non — oui

505
Toutes valeurs de f traitées ?

non

506
non ← $U(f) < p(f)$ ?

oui

506bis
non ← $N(f) < y_f$ ?

oui

Création de $e_N=(U_N, L_N)$ — 507

Calcul de d pour $e_N$ — 508

509
oui ← $d > d_H$ ?

non

511
$e_N$ est inséré dans E2 ← non

510
$e_{Nbis}=(U_{Nbis}, L_{Nbis})$ avec $U_{Nbis}=U_N$ ?

oui

512
oui ← $d < d'$ ? → non

514
$e_N$ remplace $e_{Nbis}$ dans E2

513
$e_N$ n'est pas inséré dans E2

516
$L_C = L_F$

Fin

| | |
|---|---|
| (0,0) | Initialisation |
| (1,0)          (0,1) | Etape de construction 1 |
| (2,0)          (1,1)          (0,2) | Etape de construction 2 |
| (3,0)      (2,1)          (1,2)      (0,3) | Etape de construction 3 |
| (4,0)      (3,1)      (2,2)      (1,3)      (0,4) | Etape de construction 4 |
| (5,0)      (4,1)      (3,2)          (2,3)      (1,4)      (0,5) | Etape de construction 5 |
| (5,1)      (4,2)      (3,3)      (2,4)      (1,5) | Etape de construction 6 |
| (5,2)      (4,3)          (3,4)      (2,5) | Etape de construction 7 |
| (5,3)          (4,4)          (3,5) | Etape de construction 8 |
| (5,4)          (4,5) | Etape de construction 9 |
| (5,5) | Etape de construction 10 |

# Figure 6

**Figure 7A**

**Figure 7B**

**Figure 7C**

**Figure 8A**

Figure 8B

Figure 8C

EP 3 693 902 B1

**Figure 9A**

EP 3 693 902 B1

**Figure 9B**

1006

L'ensemble G modifié remplace l'ensemble G

Construction d'au moins un ensemble G' — 1001

Pour le ou chaque ensemble G', construction d'une liste de collecte $L_c'$ — 1002

modification de l'ensemble G — 1003

L'ensemble G modifié comprend un seul dispositif tampon source ?

100 4

non

oui

$L_c = L_c'$ — 1005

**Figure 10**

```
            ┌─────────────────────────────┐
            │      G={F1, F2, F3, F4}      │
            └─────────────────────────────┘
                          │
                          ▼
   ┌──────────────────────────────────────┐
   │            G'={F1, F2}               │
   │            L_C'(F1+F2)                │ ⟿ 1101
   │         G={F1+F2, F3, F4}            │
   └──────────────────────────────────────┘
                          │
                          ▼
   ┌──────────────────────────────────────┐
   │           G'={F1+F2, F3}             │
   │           L_C'(F1+F2+F3)             │ ⟿ 1102
   │          G={F1+F2+F3, F4}            │
   └──────────────────────────────────────┘
                          │
                          ▼
   ┌──────────────────────────────────────┐
   │          G'={F1+F2+F3, F4}           │
   │          L_C'(F1+F2+F3+F4)           │ ⟿ 1103
   │          G={F1+F2+F3+F4}             │
   └──────────────────────────────────────┘
                          │
                          ▼
   ┌──────────────────────────────────────┐
   │                                      │
   │        L_C=L_C'(F1+F2+F3+F4)         │ ⟿ 1104
   │                                      │
   └──────────────────────────────────────┘
```

**Figure 11A**

G={F1, F2, F3, F4}

G'$_1$={F1, F2}
L$_C$'(F1+F2)
~ 1101'a

G'$_2$={F3, F4}
L$_C$'(F3+F4)
~ 1101'b

~ 1101'

G={F1+F2, F3+F4}
~ 1101'c

G'={F1+F2, F3+F4}
L$_C$'(F1+F2+F3+F4)
G={F1+F2+F3+F4}
~ 1102'

L$_C$=L$_C$'(F1+F2+F3+F4)
~ 1103'

## Figure 11B

EP 3 693 902 B1

```
                              ┌──────────────┐
                              │    Début     │
                              └──────┬───────┘
                                     ▼
                              ┌──────────────┐
                              │ Initialisation E1' │ ~1201
                              └──────┬───────┘
                                     ▼
                              ┌──────────────┐
                              │ Initialisation E2' │ ~1202
                              └──────┬───────┘
                                     ▼
                                                          1203
                          ◇ Toutes étapes de                ◇ ─── oui ───►
                            construction effectuées ?
                                     │ non
                                     ▼                     1204
  1215                    ◇ Tous états de E1' traités ? ◇ ── oui ──
  ┌────────────────────┐   ◄── oui
  │ Si étape courante différente de │        │ non
  │ nᵉᵐᵉ étape, E2 devient le nouvel E1 │                   1205
  └────────────────────┘  ◇ Toutes valeurs de f traitées ? ◇ ── oui ──
                                     │ non
                                                          1206
                    ◄── non ──  ◇ U'(f) < p(f) ? ◇
                                     │ oui
                                                          1206bis
                    ◄── non ──  ◇ N'(f) < y_f ? ◇
                                     │ oui
                              ┌──────────────┐
                              │ Création de e'_N=(U'_N, L'_N) │ ~1207
                              └──────┬───────┘
                                     ▼
                              ┌──────────────┐
                              │ Calcul de d' pour e'_N │ ~1208
                              └──────┬───────┘
                                     ▼                    1209
                    ◄── oui ──  ◇ d' > d_H ? ◇
                                     │ non
  1211                                                    1210
  ┌──────────────┐   ◄── non ──  ◇ e'_Nbis=(U'_Nbis,L'_Nbis) avec ◇
  │ e'_N est inséré dans E2' │          U'_Nbis=U'_N ?
  └──────────────┘                      │ oui
                                                          1212
                    ◄── oui ──  ◇ d' < d'_bis ? ◇ ── non ──
  ┌──────────────────┐                    ┌──────────────────┐
  │ e'_N remplace e'_Nbis dans E2' │ ~1214  │ e'_N n'est pas inséré dans E2' │ ~1213
  └──────────────────┘                    └──────────────────┘

                              ┌──────────────┐
                              │  L_C' = L'_F  │ ~1216
                              └──────┬───────┘
                                     ▼
                              ┌──────────────┐
                              │     Fin      │
                              └──────────────┘
```

# Figure 12

Figure 13

**Figure 14**

## RÉFÉRENCES CITÉES DANS LA DESCRIPTION

**Documents brevets cités dans la description**

- FR 2915979 A1
- FR 3058708 A1
- FR 3051948 A1
- FR 3045583 A1
- FR 3031510 A1

**Littérature non-brevet citée dans la description**

- **BLANDINE VACHER et al.** Le problème d'injection dans un entrepôt. *ROADEF,* 2019